# EUROPEAN PATENT APPLICATION

(11) **EP 1 298 565 A2**
(43) Date of publication of application: **02.04.2003**
(21) Application number: 02021745.1
(22) Date of filing: 25.09.2002
(51) Int. Cl.: G06F 17/60

(54) **Method, system and program for supporting vehicle sales**

(30) Priority: 28.09.2001 JP 2001303203; 26.07.2002 JP 2002218763
(71) Applicant: Mazda Motor Corporation, Aki-gun, Hiroshima 730-8670 (JP)
(72) Inventor: Takaoka, Hiroki, Aki-gun, Hiroshima 730-8670 (JP)
(74) Representative: Müller-Boré & Partner Patentanwälte

(57) **Abstract**

In response to a purchase contract for a vehicle made with a customer, a manufacturer server, a dealer server or a plant server stores the specification of the vehicle in contracted information DB in association with vehicle identification information for specifying the vehicle, and then issues a certificate for certifying the specification of the vehicle related to the purchase contract at a given timing. Also, the server receives a request for confirming the specification of the vehicle related to the purchase contract and the identification information from an online user terminal, selects the specification information of the vehicle from the contracted information DB, and sends the selected specification information to be displayed in the user terminal. Thus, the customer having purchased the vehicle with the specification selected online can grasp the selected specification after the purchase.

## Description

### BACKGROUND OF THE INVENTION

The present invention relates to a method, a system and a program for supporting vehicle sales, and more particularly, it relates to technique for a sales support system and the like for supporting vehicle sales online by sending, to a customer, purchase support information of a vehicle having a specification selected by the customer via communications lines.

In a conventionally known computer system, as disclosed in, for example, Japanese Laid-Open Patent Publication No. 5-274326, catalogue information of an article to be sold is computerized in the form of multimedia information to be stored, so that in the case where the article has variations in color, design and optional components, a customer can customize the article by selecting menu items and can be provided with purchase support information by visualizing the appearance of the customized article. Also, a system in which estimate of the thus selectively customized article and the like are performed for guiding the customer to purchase of the article is known.

In the case where a customer customizes an article by selecting a specification online, however, the number of selectable specification items is enormous, and therefore, after purchasing the article having the selected specification, the customer may forget the details of the specification of the article. In particular, when the customer forgets the details in an item that cannot be judged by appearance, there may arise a problem in repair, inspection or resale of the article.

More specifically, in the case where the article is a vehicle, the number of kinds of specifications of a catalogue model described in a catalogue is generally 10 at most. With respect to a vehicle having a specification designated as, for example, "type R", the outline of the specification can be easily grasped on the basis of the designation of "type R". Therefore, in the case where a vehicle having the "type R" specification is to be sold as a used vehicle to a used vehicle dealer or at auction, the specification of the vehicle can be expressed by the designation of "type R", and hence, an appropriate price can be easily set.

In contrast, in the case where a specification of a vehicle is selected by a customer online as in this invention, the number of selectable specifications is very large, and therefore, these selectable specifications are together expressed as a "customized specification". Accordingly, vehicles having the "customized specification" include, for example, one equipped with a large number of specification items for improving the driving performance and one equipped with a large number of specification items for improving the passenger safety performance. Thus, the specification of each vehicle cannot be grasped on the basis of the designation of "customized specification".

Also, the "customized specification" includes an expensive specification equipped with a large number of expensive options as well as an inexpensive specification equipped with few options. Therefore, when a vehicle having the "customized specification" is on resale as a used vehicle, it is very difficult to set an appropriate price.

The present invention was devised in consideration of these problems, and an object of the invention is, in the case where a customer purchases a vehicle with a specification selected or configures a vehicle online, allowing the selected specification or configuration to be grasped even after the purchase, so as to prevent the occurrence of the above-described problems and minimize dislocation of the market.

### SUMMARY OF THE INVENTION

In order to achieve the object, the present invention provides the following means for overcoming the conventional problems: After making a purchase contract for a vehicle with a customer, a certificate for certifying the specification or configuration of the vehicle related to the purchase contract is issued; or in response to identification information of a vehicle related to a purchase contract sent from an online terminal, the specification or configuration of the vehicle is sent to be displayed in the terminal having sent the identification information.

Specifically, the the invention is directed to a vehicle sales support or configuration method for supporting vehicle sales or vehicle configuration online by allowing a customer desiring to purchase a vehicle to select a specification or configuration of the vehicle by selecting preferred specification or configuration items among a plurality of specification or configuration items of the vehicle and sending purchase support information regarding the vehicle having the selected specification or configuration to the customer.

The vehicle sales support or configuration method includes a contracted specification or configuration storing step of storing a selected specification or configuration of a vehicle related to a purchase contract, made at least after specification or configuration selection of the customer, in a database as contracted specification or configuration data in association with identification information for specifying the vehicle; and a certificate issuing step, performed at given timing after making the purchase contract for the vehicle with the customer, of selecting the contracted specification data of the vehicle corresponding to the identification information from contracted specification or configuration data stored in the database and issuing a certificate for certifying the specification or configuration of the vehicle.

Thus, when a customer makes a purchase contract for a vehicle, the specification or configuration of the vehicle related to the contract is stored in the database in association with identification information for specifying the vehicle, and at a proper timing thereafter, a certificate for certifying the specification of the vehicle is issued. Accordingly, the customer can confirm the specification of the vehicle after the purchase, and if it is necessary to certify the specification for repair or resale of the vehicle, the specification or configuration can be definitely and easily certified.

According a preferred embodiment of the invention, the certificate issued in the certificate issuing step is stated in at least one of a vehicle inspection document, a warranty and a body of the vehicle.

Thus, convenience can be improved because the certificate is often checked together with a vehicle inspection document or the like, and in addition, the certificate is minimally lost.

The the invention is further directed to a vehicle sales support or configuration method for supporting vehicle sales or configuration online by allowing a customer desiring to purchase a vehicle to select a specification or configuration of the vehicle by selecting preferred specification or configuration items among a plurality of specification or configuration items of the vehicle and sending purchase support information regarding the vehicle having the selected specification or configuration to the customer.

The vehicle sales support method includes a contracted specification or configuration storing step of storing a selected specification of a vehicle related to a purchase contract, made at least after specification or configuration selection of the customer, in a database as contracted specification data in association with identification information for specifying the vehicle; a contracted specification or configuration selecting step, performed after making the purchase contract for the vehicle, of receiving a specification or configuration confirmation request regarding the vehicle related to the purchase contract and the identification information of the vehicle from an online terminal, and selecting the contracted specification data of the vehicle corresponding to the identification information from contracted specification data stored in the database; and a specification submitting displaying step of sending the specification or configuration of the vehicle selected in the contracted specification or configuration selecting step to be displayed in the online terminal.

Thus, similarly to the previous embodiment, when a customer makes a purchase contract for a vehicle, the specification or configuration of the vehicle related to the purchase contract is stored in the database in association with identification information for specifying the vehicle. Thereafter, when a request for confirming the specification or configuration of the vehicle related to the purchase contract and the identification information are sent from an online terminal, the contracted specification or configuration information of the vehicle corresponding to the identification information is selected from all contracted specification or configuration information stored in the database, and the specification of the vehicle is sent to be displayed in the terminal. Accordingly, even when the customer forgets the specification or configuration of the vehicle related to the purchase contract, the specification or configuration can be displayed in the online terminal at any time, and the specification or configuration can be confirmed after the purchase as previously.

According to a preferred embodiment of the invention, the identification information of the vehicle corresponds to a body number or a license number.

Thus, each vehicle can be easily identified, and a problem of loss of the identification information can be avoided.

Preferably, the vehicle sales support or configuration method further includes a certificate issuing step, performed after making the purchase contract for the vehicle with the customer, of receiving a certificate issue request from an online terminal and issuing a certificate for certifying the specification or configuration of the vehicle related to the purchase contract.

Thus, a certificate can be issued by performing a predetermined operation after confirming the specification or configuration in the online terminal. Therefore, if it is necessary to certify the specification or configuration of the purchased vehicle for repair or resale, the specification can be definitely and easily certified.

Preferably, a database in which vehicle purchase support information is previously stored correspondingly to the plurality of specification or configuration items selectable by the customer desiring to purchase the vehicle is prepared, and the method further includes a purchase support information selecting step of receiving the specification or configuration of the vehicle selected by the customer from the online terminal and selecting vehicle purchase support information corresponding to the specification or configuration from the database; a purchase support information submitting step of sending the purchase support information selected in the purchase support information selecting step to the online terminal; and a purchase guiding step of receiving an operation signal sent from the online terminal when the customer performs a given operation in the online terminal, and guiding the customer to purchase of the vehicle having the selected specification, and the selected specification selected by the customer is displayed in the online terminal only when information for specifying the customer is received from the online terminal in the purchase guiding step, and the contracted specification or configuration of the vehicle is sent to be displayed in the online terminal regardless of receipt of the information for specifying the customer in the specification or configuration submitting displaying step.

Therefore, when a customer selects a specification or configuration of a vehicle by operating an online terminal before purchase, information of the specification (selected specification) is received via the communication lines, so that purchase support information related to the selected specification or configuration can be selected from all purchase support information previously stored in the database to be sent to the terminal. As a result, the customer can confirm the visualized appearance or the like of the vehicle having the specification or configuration selected by himself/herself.

Furthermore, when the customer performs a predetermined operation after the input of the specification or configuration, a signal corresponding to the operation is received via the communications lines, so that the customer can be guided to purchase of the vehicle by providing estimated price information or receiving application for negotiations in accordance with the signal (purchase guiding step). At this point, if the specification selected by the customer is displayed in the terminal merely when the information for specifying the customer is received from the terminal, the specification or configuration selected by the customer can be prevented from being acknowledged by a third party other than the customer.

On the other hand, when a request for confirming the specification of the vehicle and the identification information are received from the online terminal after the purchase contract for the vehicle, the contracted specification of the vehicle related to the purchase contract is sent to be displayed in the terminal as described above (specification or configuration submitting step). In this case, the specification or configuration of the vehicle is displayed in the terminal regardless of receipt of the information for specifying the customer. Therefore, for example, when the customer transfers the vehicle related to the purchase contract to a used vehicle dealer or requests a repair shop to repair the vehicle after the purchase contract, the used vehicle dealer or the repair shop can easily confirm the specification of the vehicle, which is very convenient.

Further preferably, a database in which vehicle purchase support information is previously stored correspondingly to the plurality of specifications selectable by the customer desiring to purchase the vehicle is prepared, and the method further includes a purchase support information selecting step of receiving the specification or configuration of the vehicle selected by the customer from the online terminal and selecting vehicle purchase support information corresponding to the specification or configuration from the database; a purchase support information submitting step of sending the purchase support information selected in the purchase support information selecting step to the online terminal; and a purchase guiding step of receiving an operation signal sent from the online terminal when the customer performs a given operation in the online terminal, and guiding the customer to purchase of the vehicle having the selected specification or configuration, and the selected specification selected by the customer and estimated price information of the vehicle having the selected specification are displayed in the online terminal in the purchase guiding step, and the estimated price information is not displayed in the online terminal in the specification or configuration submitting displaying step.

Thus, the customer can confirm the visualized appearance of the vehicle having the specification or configuration selected by himself/herself online before the purchase of the vehicle. Also, the customer can be guided to purchase of the vehicle by providing information, such as an estimated price, necessary for reviewing the purchase, or by receiving application for negotiations (purchase guiding step).

On the other hand, when a request for confirming the specification or configuration of the vehicle and the identification information are received from the online terminal after making the purchase contract for the vehicle, the contracted specification or configuration of the vehicle related to the purchase contract is sent to be displayed in the terminal as described above (specification submitting step). In this case, the estimated price information is not displayed in the terminal. Thus, after making the purchase contract when a third party can browse the specification or configuration of the vehicle, the estimated price information is not displayed in the online terminal, and hence, the third party cannot find the estimated price.

Still further preferably, a name of a catalogue model having a specification closest to the contracted specification or configuration and a specification or configuration difference from the catalogue model are displayed in the online terminal in the specification or configuration submitting displaying step in addition to the contracted specification or configuration of the vehicle selected in the contracted specification or configuration selecting step.

Thus, without confirming each specification or configuration item, the specification or configuration of the vehicle can be easily grasped by comparing with the existing specification or configuration of a catalogue model, for example, as a specification or configuration in which the engine is tuned up and an air spoiler is removed from a "type R" specification or configuration, which is very convenient.

Most preferably, a standard price of the catalogue model in a used vehicle market is sent to the online terminal to be displayed in addition to the name of the catalogue model in the specification or configuration submitting displaying step.

Thus, a price at which the vehicle is to be on resale as a used vehicle can be easily and appropriately set on the basis of the standard price of the catalogue model having the specification closest to that of the vehicle and the specification difference.

According to a further preferred embodiment, the vehicle sales support or configuration method further includes a contracted specification or configuration modifying step, performed after making the purchase contract for the vehicle, of receiving the identification information of the vehicle related to the purchase contract and specification or configuration modification information from the online terminal, and modifying the contracted specification or configuration data of the vehicle stored in the database on condition that the specification or configuration modification information includes a given password.

Therefore, even in the case where an option is added later to the vehicle purchased by the customer and the specification of the vehicle is changed, the contracted specification or configuration data of the vehicle stored in the database is modified when the identification information and specification or configuration modification information of the vehicle are received from the online terminal. Accordingly, the contracted specification data can be updated to accord with the specification or configuration of the actual vehicle. In addition, the update of the data can be performed on condition that the specification modification information includes, for example, a password of a dealer of the option, and hence, unauthorized data update can be prevented.

The invention is further directed to a vehicle sales support or configuration system for supporting vehicle sales or vehicle configuration online by allowing a customer desiring to purchase a vehicle to select a specification or configuration of the vehicle by selecting preferred specification items among a plurality of specification or configuration items of the vehicle and sending purchase support information regarding the vehicle having the selected specification to the customer.

The vehicle sales support or configuration system includes a database for storing a selected specification or configuration of a vehicle related to a purchase contract, made at least after specification or configuration selection of the customer, as contracted specification or configuration data in association with identification information for specifying the vehicle; and certificate issuing means, operated at given timing after making the purchase contract for the vehicle with the customer, for selecting the contracted specification or configuration data of the vehicle corresponding to the identification information from contracted specification or configuration data stored in the database and issuing a certificate for certifying the specification or configuration of the vehicle.

In the vehicle sales support or configuration system of the invention, the vehicle sales support or configuration method according to the invention or an embodiment thereof can be practiced, resulting in attaining the effect of the vehicle sales support or configuration method.

According to a preferred embodiment of the invention, the vehicle sales support vehicle sales support or configuration method system includes a database for storing a selected specification vehicle sales support or configuration method of a vehicle related to a purchase contract, made at least after specification or configuration selection of the customer, in a database as contracted specification or configuration data in association with identification information for specifying the vehicle; contracted specification or configuration selecting means, operated after making the purchase contract for the vehicle, for receiving a specification or configuration confirmation request regarding the vehicle related to the purchase contract and the identification information of the vehicle from an online terminal, and selecting the contracted specification or configuration data of the vehicle corresponding to the identification information from contracted specification data stored in the database; and specification or configuration submitting displaying means for sending the specification or configuration of the vehicle selected by the contracted specification or configuration selecting means to be displayed in the online terminal.

Preferably, the vehicle sales support or configuration system further includes certificate issuing means, operated after making the purchase contract for the vehicle with the customer, for receiving a certificate issue request from an online terminal and issuing a certificate for certifying the specification or configuration of the vehicle related to the purchase contract.

Further preferably, the vehicle sales support or configuration system further includes a database in which vehicle purchase support information is previously stored correspondingly to the plurality of specification or configuration items selectable by the customer desiring to purchase the vehicle; purchase support information selecting means for receiving the specification or configuration of the vehicle selected by the customer from the online terminal and selecting vehicle purchase support information corresponding to the specification or configuration from the database; purchase support information submitting means for sending the purchase support information selected by the purchase support information selecting means to the online terminal; and purchase guiding means for receiving an operation signal sent from the online terminal when the customer performs a given operation in the online terminal, and guiding the customer to purchase of the vehicle having the selected specification or configuration, and the purchase guiding means displays the selected specification or configuration selected by the customer in the online terminal only when information for specifying the customer is received from the online terminal, and the specification or configuration submitting displaying means sends the contracted specification of the vehicle to be displayed in the online terminal regardless of receipt of the information for specifying the customer.

Further preferably, the vehicle sales support or configuration system further includes a database in which vehicle purchase support information is previously stored correspondingly to the plurality of specifications or configurations selectable by the customer desiring to purchase the vehicle; purchase support information selecting means for receiving the specification or configuration of the vehicle selected by the customer from the online terminal and selecting vehicle purchase support information corresponding to the specification or configuration from the database; purchase support information submitting means for sending the purchase support information selected by the purchase support information selecting means to the online terminal; and purchase guiding means for receiving an operation signal sent from the online terminal when the customer performs a given operation in the online terminal, and guiding the customer to purchase of the vehicle having the selected specification or configuration, and the purchase guiding means displays the selected specification or configuration selected by the customer and estimated price information of the vehicle having the selected specification or configuration in the online terminal, and the specification or configuration submitting displaying means does not allow the estimated price information to be displayed in the online terminal.

Preferably, the specification submitting displaying means sends a name of a catalogue model having a specification or configuration closest to the contracted specification or configuration and a specification or configuration difference from the catalogue model to be displayed in the online terminal in addition to the contracted specification or configuration of the vehicle selected by the contracted specification or configuration selecting means.

Further preferably, the specification submitting displaying means sends a standard price of the catalogue model in a used vehicle market to the online terminal to be displayed in addition to the name of the catalogue model.

Most preferably, the vehicle sales support or configuration system further includes contracted specification or configuration modifying means, operated after making the purchase contract for the vehicle, for receiving the identification information of the vehicle related to the purchase contract and specification or configuration modification information from the online terminal, and modifying the contracted specification d or configuration ata of the vehicle stored in the database on condition that the specification or configuration modification information includes a given password.

The invention is further directed to a control program for a vehicle sales support or configuration system (sales support program or configuration support program) for supporting vehicle sales or vehicle configuration online by allowing a customer desiring to purchase a vehicle to select a specification or configuration of the vehicle by selecting preferred specification or configuration items among a plurality of specification or configuration items of the vehicle and sending purchase support information regarding the vehicle having the selected specification or configuration to the customer.

The program includes a contracted specification or configuration storing step of storing a selected specification or configuration of a vehicle related to a purchase contract, made at least after specification or configuration selection of the customer, in a database as contracted specification or configuration data in association with identification information for specifying the vehicle; and a certificate issuing step, performed at given timing after making the purchase contract for the vehicle with the customer, of selecting the contracted specification or configuration data of the vehicle corresponding to the identification information from contracted specification or configuration data stored in the database and issuing a certificate for certifying the specification of the vehicle.

In the program of the invention, the vehicle sales support or configuration method according to the invention or an embodiment thereof can be practiced, resulting in attaining the effect thereof.

According to a preferred embodimentof the invention, the control program for a vehicle sales support or configuration system includes a contracted specification or configuration storing step of storing a selected specification or configuration of a vehicle related to a purchase contract, made at least after specification selection of the customer, in a database as contracted specification data in association with identification information for specifying the vehicle; a contracted specification or configuration selecting step, performed after making the purchase contract for the vehicle, of receiving a specification or configuration confirmation request regarding the vehicle related to the purchase contract and the identification information of the vehicle from an online terminal, and selecting the contracted specification or configuration data of the vehicle corresponding to the identification information from contracted specification or configuration data stored in the database; and a specification or configuration submitting displaying step for sending the specification or configuration of the vehicle selected in the contracted specification or configuration selecting step to be displayed in the online terminal.

Preferably, the control program for a vehicle sales support or configuration system further includes a certificate issuing step, performed after making the purchase contract for the vehicle with the customer, of receiving a certificate issue request from an online terminal and issuing a certificate for certifying the specification or configuration of the vehicle related to the purchase contract.

Further preferably, the vehicle sales support system includes a database in which vehicle purchase support information is previously stored correspondingly to the plurality of specification or configuration items selectable by the customer desiring to purchase the vehicle, and the control program further includes a purchase support information selecting step of receiving the specification or configuration of the vehicle selected by the customer from the online terminal and selecting vehicle purchase support information corresponding to the specification or configuration from the database; a purchase support information submitting step of sending the purchase support information selected in the purchase support information selecting step to the online terminal; and a purchase guiding step of receiving an operation signal sent from the online terminal when the customer performs a given operation in the online terminal, and guiding the customer to purchase of the vehicle having the selected specification or configuration, and the selected specification or configuration selected by the customer is displayed in the online terminal only when information for specifying the customer is received from the online terminal in the purchase guiding step, and the contracted specification or configuration of the vehicle is sent to be displayed in the online terminal regardless of receipt of the information for specifying the customer in the specification submitting displaying step.

Further preferably, the vehicle sale support system includes a database in which vehicle purchase support information is previously stored correspondingly to the plurality of specifications or configurations selectable by the customer desiring to purchase the vehicle, and the control program further includes a purchase support information selecting step of receiving the specification of the vehicle selected by the customer from the online terminal and selecting vehicle purchase support information corresponding to the specification or configuration from the database; a purchase support information submitting step of sending the purchase support information selected in the purchase support information selecting step to the online terminal; and a purchase guiding step of receiving an operation signal sent from the online terminal when the customer performs a given operation in the online terminal, and guiding the customer to purchase of the vehicle having the selected specification or configuration, and the selected specification or configuration selected by the customer and estimated price information of the vehicle having the selected specification or configuration are displayed in the online terminal in the purchase guiding step, and the estimated price information is not displayed in the online terminal in the specification or configuration submitting displaying step.

Still further preferably, a name of a catalogue model having a specification or configuration closest to the contracted specification or configuration and a specification or configuration difference from the catalogue model are displayed in the online terminal in the specification or configuration submitting displaying step in addition to the contracted specification or configuration of the vehicle selected in the contracted specification or configuration selecting step.

Further preferably, a standard price of the catalogue model in a used vehicle market is sent to the online terminal to be displayed in addition to the name of the catalogue model in the specification submitting displaying step.

Most preferably, the control program for a vehicle sales support or configuration system further includes a contracted specification or configuration modifying step, performed after making the purchase contract for the vehicle, of receiving the identification information of the vehicle related to the purchase contract and specification or configuration modification information from the online terminal, and modifying the contracted specification or configuration data of the vehicle stored in the database on condition that the specification or configuration modification information includes a given password.

As described so far, according to the present invention, in the case where vehicle sales or configuration is supported online by allowing a customer desiring to purchase a vehicle to select a specification or configuration of the vehicle via communications lines and sending purchase support information regarding the vehicle having the selected specification to the customer, after making a purchase contract for the vehicle with the customer, a certificate for certifying the specification or configuration of the vehicle is (preferably automatically) issued, or the specification of the vehicle is sent to be displayed in an online terminal in response to identification information of the vehicle related to the purchase contract received from the online terminal. Therefore, the specification or configuration of the vehicle can be easily confirmed even after the purchase, and if it is necessary to certify the specification or configuration for repair or resale of the vehicle, the specification or configuration can be definitely and easily certified.

### BRIEF DESCRIPTION OF THE DRAWINGS

FIG. **1** is a conceptual diagram for showing the whole structure of a customized vehicle estimate/order or configuration system according an embodiment of the invention;
FIG. **2** is a block diagram for showing an exemplified internal structure of a manufacturer server, a dealer server, a dealer terminal or a user terminal;
FIG. **3** is a diagram for showing a functional architecture of processing modules executed in the customized vehicle estimate/order or configuration system;
FIG. **4** is a diagram for showing transition of display windows in initial processing (M1) and vehicle specification or configuration selection processing (M2);
FIG. **5** is a diagram for showing transition of display windows in estimate/assessment request processing (M3) and an e-mail sending function involved in estimate/assessment request;
FIG. **6** is a diagram for showing transition of display windows in estimate items confirmation processing (M4);
FIG. **7** is a diagram for showing transition of display windows in negotiation application processing (M5) and an e-mail sending function involved in negotiation application;
FIG. **8** is a flowchart for showing entire rough procedures executed by the manufacturer server;
FIG. **9** is a flowchart of the estimate/assessment request processing (M3) executed by the manufacturer server;
FIG. **10** is a flowchart of the estimate items confirmation processing (M4) executed by the manufacturer server;
FIG. **11** is a flowchart of estimated price providing processing executed by the manufacturer server;
FIG. **12** is a flowchart of procedures in a first half of a contracted specification display processing executed by the manufacturer server;
FIG. **13** is a flowchart of procedures in a second half of the contracted specification or configuration display processing;
FIG. **14** is a diagram of an exemplified top window **A-1** corresponding to a homepage window;
FIG. **15** is a diagram of an exemplified home window **A-2**;
FIG. **16** is a diagram of an exemplified format of vehicle specification or configuration selection windows (**B-1** through **B-15**) displayed in the vehicle specification or configuration selection processing (M2);
FIG. **17** is a diagram of an exemplified window of details of a manufacturer recommended retail price displayed when a "detail" button of FIG. 16 is operated;
FIG. **18** is a diagram of an exemplified selected specification display window **B-15** displayed in the vehicle specification or configuration selection processing (M2);
FIG. **19** is a diagram of an exemplified estimate request top window **C-1;**
FIG. **20** is a diagram of an exemplified assessment request input window C-2;
FIG. **21** is a diagram of an exemplified ID/password input window **D-1;**
FIG. **22** is a diagram of an exemplified purchase review information list window **D-2;**
FIG. **23** is a diagram of an exemplified estimate items confirmation window **D-3**;
FIG. **24** is a diagram of an exemplified negotiation application input window **F-1**;
FIG. **25** is a diagram of an exemplified vehicle identification information input window;
FIG. **26** is a diagram of an exemplified retrieval result display window;
FIG. **27** is a diagram of an exemplified certificate for certifying the specification or configuration of a vehicle;
FIG. **28** is a flowchart of processing executed by the dealer server;
FIG. **29** is a flowchart of processing executed by a plant server; and
FIG. **30** is a diagram of an exemplified vehicle specification or configuration modification window.

### DETAILED DESCRIPTION OF THE INVENTION

Now, preferred embodiments of the invention will be described with reference to the accompanying drawings. Herein, a customized vehicle means a vehicle having a specification determined, by utilizing a vehicle sales support or configuration system of the invention (which is designated as a customized vehicle estimate/order or configuration system in this embodiment), by a user (hereinafter sometimes referred to as a customer) selecting one of a plurality of specification or configuration items with respect to each of a plurality of items (such as an engine, transmission, tires, wheels and upholstery) on the basis of a standard vehicle (base vehicle) having a predetermined specification or configuration and equipment. In other words, different specifications or configurations in number corresponding to the number of combinations of the optional specification or configuration items of the plural items are set with respect to a vehicle sold by using the present system (namely, a vehicle whose specification can be selected by using the present system), and a customized vehicle corresponds to a vehicle having a specification or configuration selected from the plural specifications or configurations by a user.

### - Whole structure of hardware -

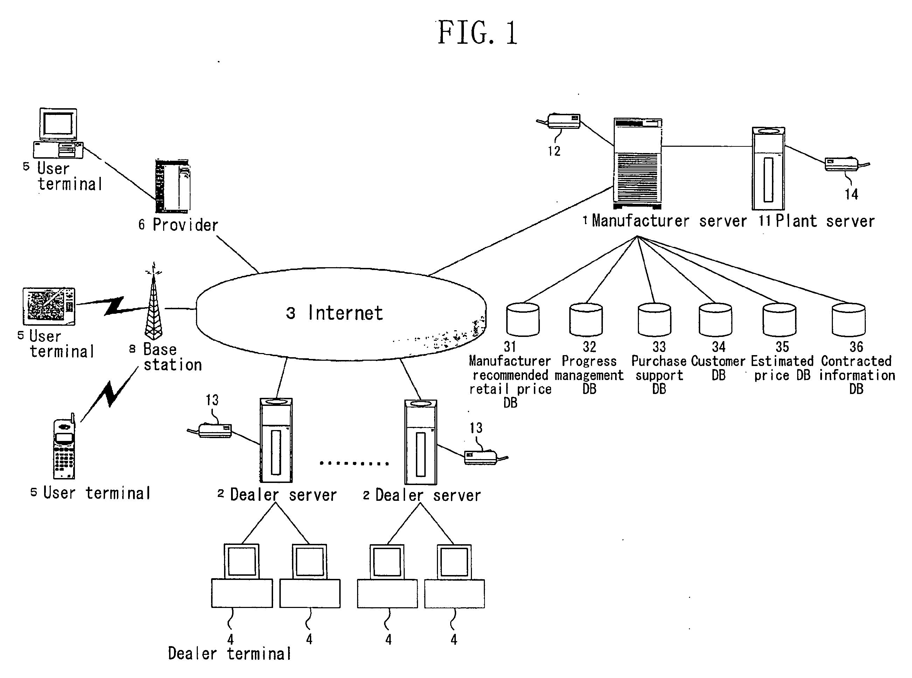

FIG. **1** is a conceptual diagram for showing the whole structure of the customized vehicle estimate/order system.

In FIG. **1**, a reference numeral **1** denotes a server computer used by a manufacturer manufacturing a customized vehicle that is selected in the specification or configuration and is ordered by using the customized vehicle estimate/order system. This server computer **1** principally functions as an application server for a dealer terminal **4** or a user terminal **5** (that is a terminal operated online by a customer) described below. This server computer may be installed in the manufacturer or operated outside the manufacturer by a third party for the manufacturer, and hereinafter, this server computer is designated as the manufacturer server.

The manufacturer server **1** includes a manufacturer recommended retail price database **31** (hereinafter, database is designated as DB for short), a progress management DB **32**, a purchase support DB **33**, a customer DB **34**, an estimated price DB **35** and a contracted information DB **36**, and can make an access by a general method to any of these DBs if necessary during its operation.

In the manufacturer recommended retail price DB **31**, data with which retail prices recommended by the manufacturer (hereinafter referred to as the manufacture recommended retail prices) can be calculated are stored with respect to optional specification or configuration items selectable for a customized vehicle in the present system in association with identification information (hereinafter sometimes referred to as the customize numbers) for specifying the respective specifications or configurations.

In the progress management DB **32**, progress situations ranging from manufacture to delivery of customized vehicles ordered by using the present system, such as a stock situation, an assembly situation (manufacture situation) and a conveyance situation, are stored with respect to each customized vehicle. The contents of the progress management DB **32** are manually or automatically modified/updated in order.

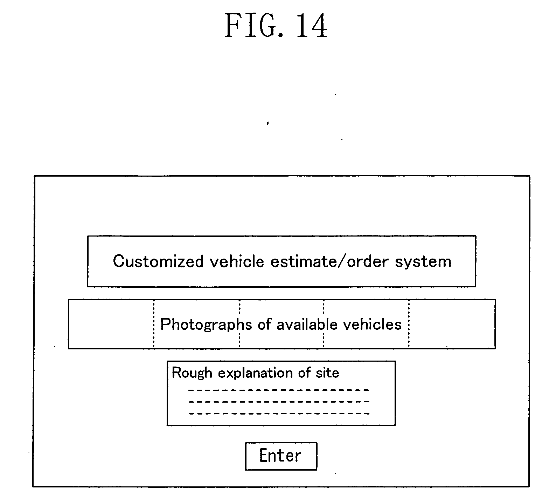

In the purchase support DB **33**, information of various windows (shown in FIGS. **14** through **29**) (including purchase support information corresponding to each specification) to be displayed on the user terminal **5** in the customized vehicle estimate/order system and information of previously set restriction on allowable choices that can be selected by a user in specification or configuration selection as described below are stored.

In the customer DB **34**, information of a customized vehicle already selected by each user by using the present system, an estimated price of the customized vehicle presented to the user and assessment of a trade-in vehicle presented to each user are stored in association with a user ID issued to each user.

In the estimated price DB **35**, data of estimated prices to be presented to each user when each of a plurality of dealers sells each specification or configuration item of the vehicle is stored (correspondingly to a database of each dealer). The data of estimated prices set by each dealer is automatically modified/updated by the manufacturer server **1** in accordance with prescribed conditions. Although every dealer can access to the data set by itself stored in the estimated price DB **35** and refer to or modify the stored contents, the data set by another dealer can be neither accessed nor referred to or modified by employing a currently generally used security function in order to guarantee the autonomy and independency in the sales business operations of the respective dealers.

In the contracted information DB **36**, when a user makes a purchase contract for a customized vehicle as a result of negotiations, the specification or configuration information of the vehicle related to the purchase contract is stored as contracted specification or configuration data through a predetermined operation of the dealer server **2** or the dealer terminal **4** described later. Thereafter, when identification information for specifying the vehicle (namely, a body number or a license number based on which each vehicle can be distinguished from another vehicle having completely the same specification or configuration differently from a customize number; hereinafter referred to as the vehicle identification information) is determined, the vehicle identification information is stored in association with the specification or configuration information of the vehicle.

In FIG. **1**, a reference numeral **2** denotes a server computer installed in each of a plurality of dealers (distributors) for selling vehicles (hereinafter referred to as the dealer server). This server computer has a function as a server of a LAN (Local Area Network) constructed in each dealer, and the function as the server includes a function as a gateway for mutually connecting the LAN and internet **3** described below. Although a dealer is a distributor for selling vehicles in this embodiment, it may be a vehicle sales company, a shop of a vehicle sales company or a sales agent in private capacity.

Also, a reference numeral **4** denotes a client computer installed in each dealer (which is designated as the dealer terminal as described above). The dealer terminal **4** and the dealer server **2** together construct what is called a server-client environment in the LAN constructed in the dealer.

The dealer terminal **4** can make an access to the manufacturer server **1** through the dealer server **2** and the internet **3** if necessary during the operation thereof as described below. With the dealer terminal **4** thus connected to (logged in) the manufacturer server **1**, the dealer terminal **4** and the manufacturer server **1** together construct the so-called server-client environment.

In the case where the dealer terminal **4** can make an access to the manufacturer server **1** without the dealer server **2**, the dealer server **2** can be omitted.

A reference numeral **3** denotes the internet, that is, typical communications lines. A reference numeral **5** denotes a user terminal such as a personal computer, a portable information terminal and a cellular phone. The user terminal **5** is operated by a user of the present system, and may be installed in the user's house, carried by the user or installed in each dealer.

In this structure, the manufacturer server **1**, the dealer server **2**, the dealer terminal **4** and the user terminal **5** can perform two-way communications via the internet **3** by a general communication scheme for sending/receiving information on the estimate/order of a customized vehicle. At this point, in the case where the user terminal **5** is a personal computer, telephone lines and the like are also used via a provider (internet provider) **6**. Alternatively, in the case where the user terminal **5** is a portable information terminal or a cellular phone, public radio telephone lines and the like are also used via a base station **8**. Such communication means may adopt general arrangements and is herein not described in detail.

A reference numeral **11** denotes a server computer installed in a plant or the like for manufacturing vehicles for managing manufacture on the manufacture line (hereinafter referred to as the plant server), which is connected to the manufacturer server **1** via dedicated communications lines capable of two-way communications. The plant server **11** and the manufacturer server **1** may be connected to each other via the internet **3.**

Reference numerals **12** through **14** denote printers respectively connected to the manufacturer server **1**, the dealer server **2** and the plant server **11**. Each of these printers **12** through **14** prints and issues a certificate for certifying a specification stored in the contracted information DB **36**, namely, the specification of a vehicle related to a purchase contract of a customer (i.e., the contracted specification or configuration).

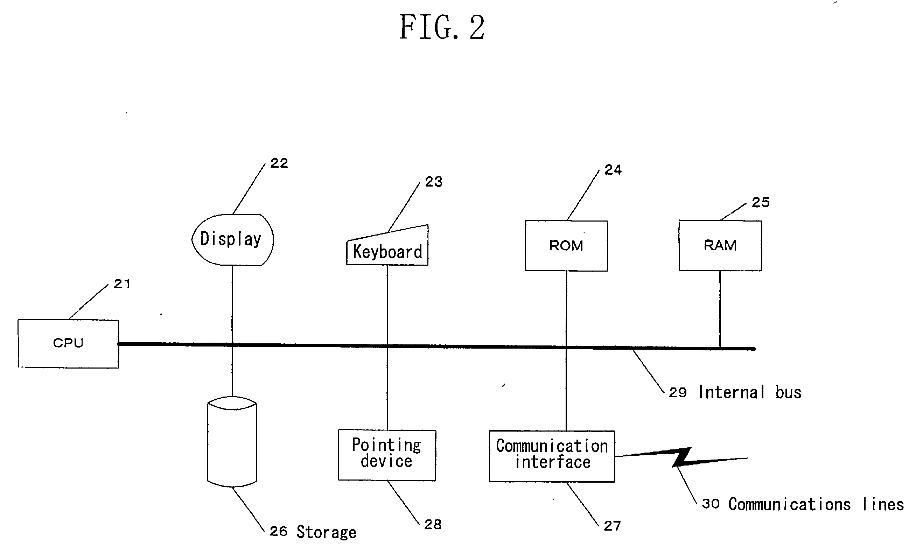

FIG. **2** is a block diagram for showing an exemplified internal structure of the manufacturer server **1**, the dealer server **2**, the dealer terminal **4** or the user terminal **5**.

In FIG. **2**, a reference numeral **22** denotes a display for displaying various windows such as a liquid crystal display device, and a reference numeral **23** denotes a keyboard, that is, input means. A reference numeral **24** denotes a ROM in which a boot program and the like are stored. A reference numeral **25** denotes a RAM for temporarily storing results of various processing. A reference numeral **26** denotes a storage, such as a hard disk drive (HDD), in which an information processing program and the like including the vehicle sales support program for operating the present system are stored. A reference numeral **27** denotes a communication interface used for communication with an external device via communications lines **30** (corresponding to the internet **3** and the like in this embodiment), which is a modem or a TA when the user terminal **5** is a personal computer and is a radio transmitter-receiver when the user terminal **5** is a portable information terminal or a cellular phone. A reference numeral **28** denotes a pointing device such as a mouse. These internal elements are connected to one another through an internal bus **29**, and a CPU (central processing unit) **21** controls the entire apparatus in accordance with the information processing program stored in the storage **26**. In this embodiment, the display **22**, the keyboard **23** and the pointing device **28** together provide what is called a man-machine interface to a user in each display window described later.

In this embodiment, each of the manufacturer server **1**, the dealer server **2**, the dealer terminal **4** and the user terminal **5** has software (a software program) of a general communication protocol capable of internet communications, an internet browsing function and a mailing function for sending/receiving data via the internet **3** in accordance with the software and general software for rendering a browser.

The CPU **21** appropriately executes these software, so that the manufacturer server **1** and the user terminal **5** or the dealer terminal **4** can together construct the so-called server-client environment with the user terminal **5** or the dealer terminal **4** connected to (logged in) the manufacturer server **1** via the internet **3.**

### - Functional architecture of customized vehicle estimate/order system -

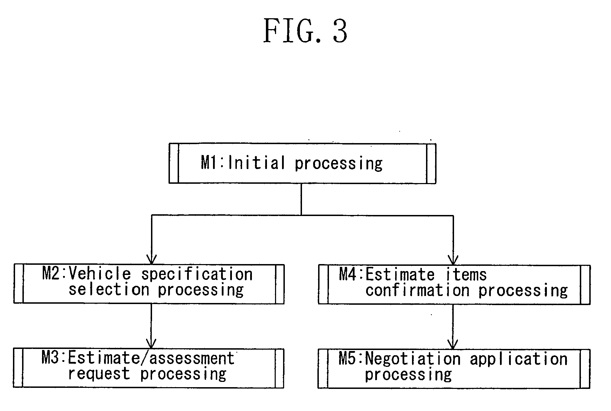

FIG. **3** is a diagram for showing the functional architecture of processing modules executed in the customized vehicle estimate/order system. Each block shown in this drawing corresponds to a unit of software (a software program) roughly divided depending upon a function described in detail below, executed by the CPU **21** of the manufacturer server **1,** and these functional units are designated as processing modules in this embodiment. These processing modules are previously stored in the storage **26** of the manufacturer server **1**.

Now, the function of each processing module will be roughly described.
1. Initial processing (M1): A top window (homepage) of the customized vehicle estimate/order system is displayed in the user terminal **5,** and the top window can be transit to another window for selecting a specification or configuration of a customized vehicle or requesting for an estimate.
2. Vehicle specification or configuration selection processing (M2): An environment is provided to the user terminal **5**, in which a preferred customized vehicle (preferred specification or configuration) can be selected by the user operating the user terminal **5** by repeatedly selecting a desired one of choices previously prepared with respect to each of a plurality of items regarding a type of vehicle to be purchased. Furthermore, when the customized vehicle (selected specifications or configurations) is determined, this processing can transit to estimate/assessment request processing (M3).
3. Estimate/assessment request processing (M3): If the user having determined the customized vehicle desires to get an estimated price of the customized vehicle, an environment is provided to the user in which estimate of the price of the customized vehicle and/or assessment of a trade-in vehicle can be requested for. When an estimate request is made, an estimated price is provided by e-mail in the name of one dealer, and the dealer is informed of this.
4. Estimate items confirmation processing (M4): When the user operating the user terminal **5** has already been provided with an estimated price of the customized vehicle whose specification or configuration has been determined, the user is provided with information such as change course of the estimated price up to the present time and a specification or configuration list. This processing can transit to a window for allowing the user to apply for negotiations for actual order.
5. Negotiation application processing (M5): When the user wants to enter into negotiations for actual purchase of the customized vehicle whose specification or configuration has been determined, this is informed of the dealer selected by the user.

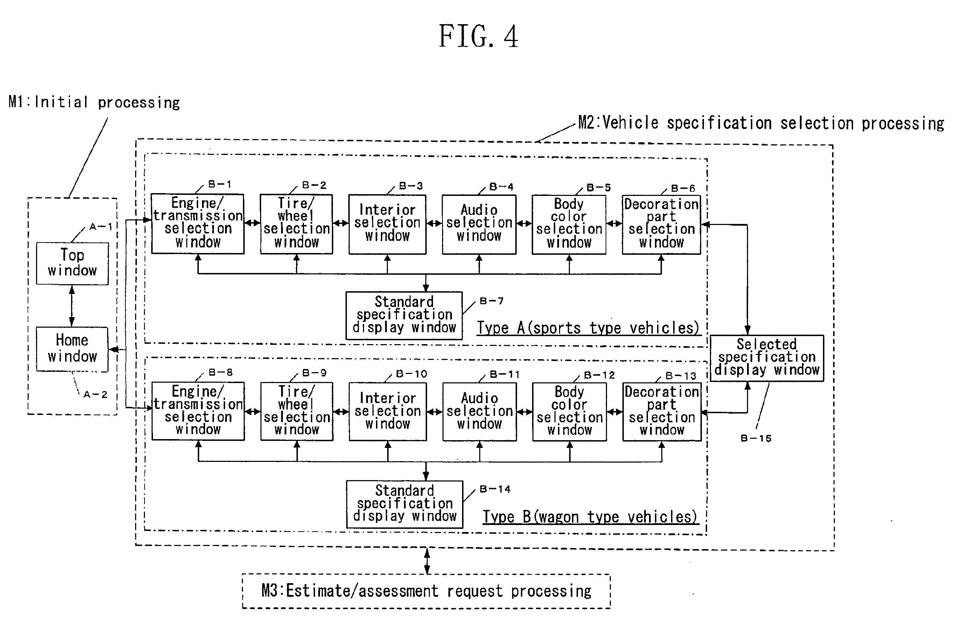

In the customized vehicle estimate/order system of this embodiment, when the processing modules described above are executed by the manufacturer server **1** with the browser program executed by the user terminal **5**, the user terminal **5** is linked to the customized vehicle estimate/order system as a client, so as to provide the man-machine interface by using display of a variety of windows as shown in FIGS. **4** through **7** (and FIGS. **14** through **24**) on the display **22** of the user terminal **5**. The user utilizes this man-machine interface, so as to select a specification or configuration and make an estimate request or an order of a desired customized vehicle by operating the user terminal **5**.

### - Software executed by manufacturer server 1 -

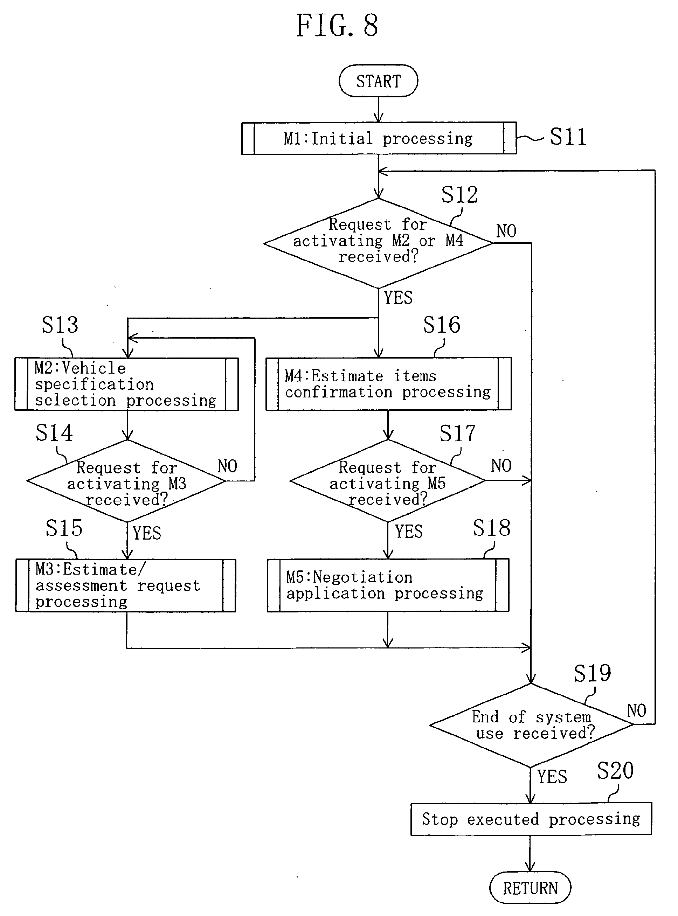

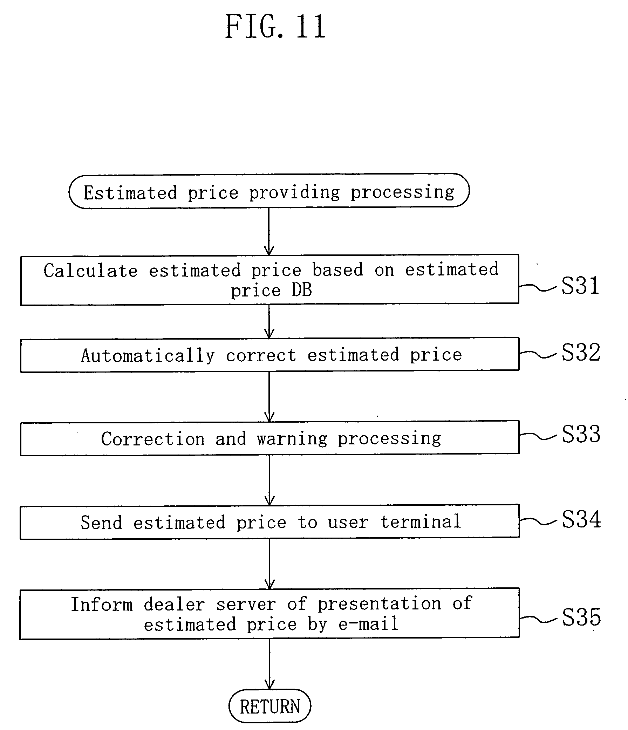

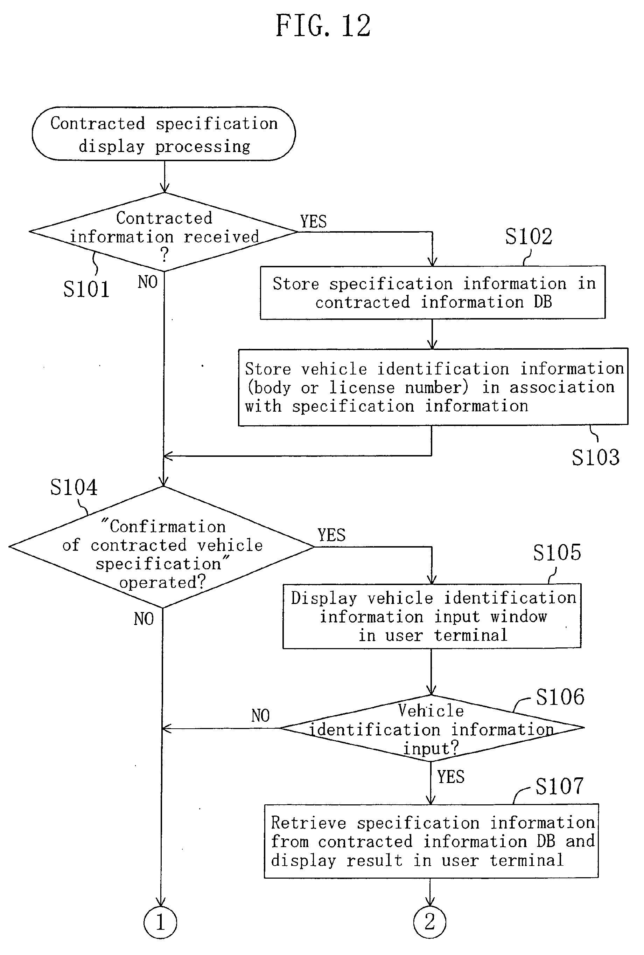

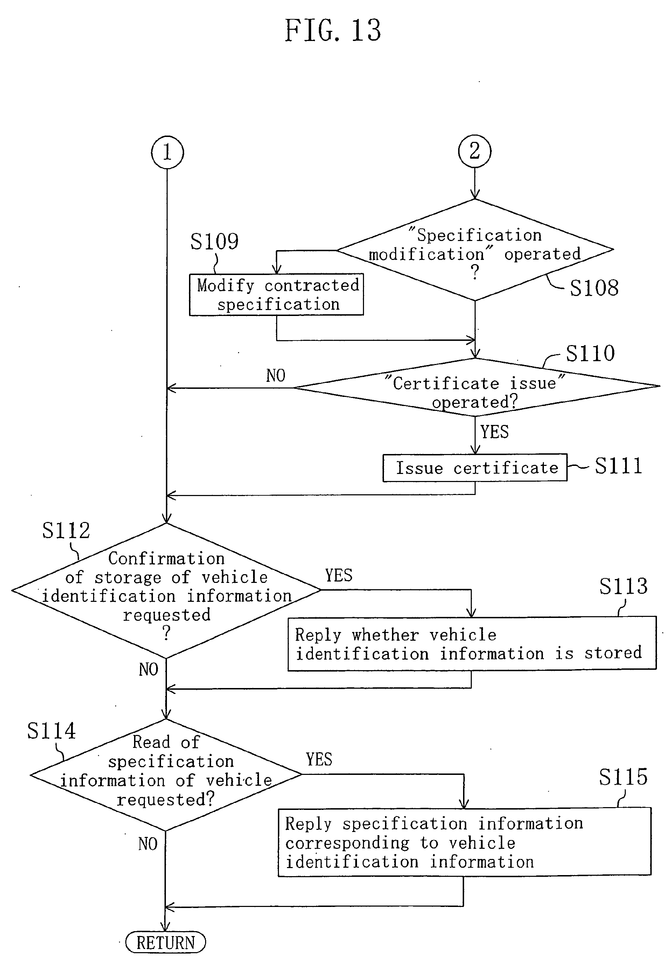

Now, the software executed by the CPU **21** of the manufacturer server **1** will be described. In the following, state transition between the respective processing modules will be first described with reference to a flowchart of FIG. **8** and transition of display windows in the respective processing modules will be described with reference to FIGS. **4** through **7**. Subsequently, estimated price providing processing will be described with reference to a flowchart of FIG. **11**, and contracted specification or configuration display processing executed separately from the above-described processing modules will be described with reference to a flowchart of FIGS. **12** and **13**.

### (1) State transition between modules:

FIG. **8** is a flowchart for roughly showing the whole processing executed by the manufacturer server **1** in this embodiment.

Each of the processing modules M1 through M5 executed by the manufacturer server **1** has a function to display a variety of windows described below on the display **22** of the user terminal **5** and to realize an input operation in the displayed windows, and the transition of the display windows in the respective processing modules will be described later with reference to FIGS. **4** through **7**.

Referring to FIG. **8**, the processing modules are executed as follows:

Steps S11 and S12: When the user terminal **5** is linked to a Web site of the present system via the internet **3,** the initial processing (M1) is executed (step S11). During the execution, it is determined whether or not data for requesting activation of the vehicle specification or configuration selection processing (M2) or the estimate items confirmation processing (M4) is received from the user terminal **5** (step S12). When the data is received, the flow proceeds to step S13 or step S16 in accordance with the content of the data, and when not, the flow proceeds to step S19.

Steps S13 through S15: The vehicle specification or configuration selection processing (M2) is executed (step S13), and during the execution, it is determined whether or not data for requesting activation of the estimate/assessment request processing (M3) is received from the user terminal **5** (step S14). When the data is received, the estimate/assessment request processing (M3) is executed (step S15).

Steps S16 through S18: The estimate items confirmation processing (M4) is executed (step S16), and during the execution, it is determined whether or not data for requesting activation of the negotiation application processing (M5) is received from the user terminal **5** (step S17). When the data is received, the negotiation application processing (M5) is executed (Step S18).

Steps S19 and S20: During the execution of each processing module, it is determined whether or not data corresponding to the end of use of the present system is received from the user terminal **5** (step S19). When the data is received, the processing of the processing module currently executed is stopped (step S20), and when not, the flow returns to step S12.

### (2) Transition of display windows in each processing module:

Now, the transition of the display windows in each of the roughly divided five processing modules described above will be described with reference to FIGS. **4** through **7**. The relationship in the state transition between the processing modules each surrounded with a broken line block in FIGS. **4** through **7** accords with the functional architecture described with reference to FIG. **3**.

### <Initial processing (M1) and vehicle specification or configuration selection processing (M2)>

FIG. **4** is a diagram for showing the transition of the display windows in the initial processing (M1) and the vehicle specification or configuration selection processing (M2).

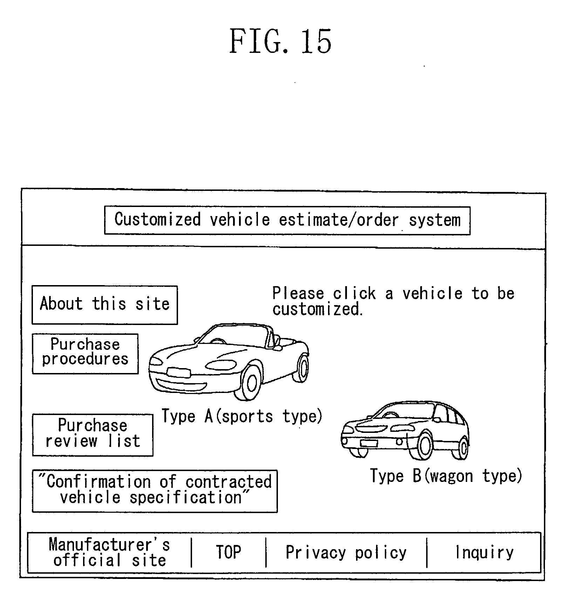

In FIG. **4,** the initial processing (M1) displays a top window **A-1** (shown in FIG. **14**) corresponding to the homepage window of the present system. The top window **A-1** includes an "enter" button to be operated by a user who desires to utilize the present system capable of specification or configuration selection, an estimate request and an order of a customized vehicle (namely, a user of the user terminal **5** linked to the manufacturer server **1** via the internet **3**). When the "enter" button is operated, the initial processing (M1) displays a home window **A-2** (shown in FIG. **15**) of the present system on the user terminal **5**.

FIG. **15** is a diagram for showing an example of the home window **A-2** displayed by the initial processing (M1).

The display window shown in FIG. **15** includes a plurality of operation buttons, and when an operation button of "about this site" or "purchase procedures" is operated, a predetermined explanatory window is displayed on the user terminal **5**. Alternatively, when an operation button of "purchase review list" is operated, the function of the estimate items confirmation processing (M4) described later is provided to the user terminal **5**.

Also in the home window **A-2**, when an operation button of "confirmation of contracted vehicle specification or configuration" is operated after making a purchase contract, a list of specification or configuration items of the vehicle related to the purchase contract of the user is displayed on the user terminal **5** through the contracted specification or configuration display processing described below (whereas, an estimated price is not displayed). This specification or configuration list can be browsed by any third party other than the customer (because there is no need to input information for identifying the customer such as a user ID and a password). Therefore, for example, when the customer is to sell the vehicle related to the purchase contract to a used vehicle dealer or request a repair shop for repair the vehicle, the used vehicle dealer or the repair shop can freely browse the specification or configuration list of the vehicle, which is very convenient. Before making a purchase contract, the selected specification or configuration and its estimated price can be displayed by operating the operation button of "purchase review list", which can be browsed by the customer alone.

Also, in the home window **A-2**, a photograph of a type A, that is, sports type vehicles or a type B, that is, wagon type vehicles is clicked, the function of the vehicle specification or configuration selection processing (M2) is provided to the user terminal **5.** In this embodiment, specifications or configurations preferable for a user can be selected with respect to the type A of sports type vehicles and the type B of wagon type vehicles exemplified for the sake of simplification.

When a desired vehicle type is selected in the home window **A-2**, the user is allowed to select a preferred specification or configuration on the basis of a standard vehicle (base vehicle) of the selected vehicle type through the function of the vehicle specification or configuration selection processing (M2). In other words, a specification or configuration previously set as the standard vehicle in the present system can be replaced with another specification or configuration, or new equipment (optional equipment) not set in the standard vehicle can be added through the specification or configuration selection operation by the user.

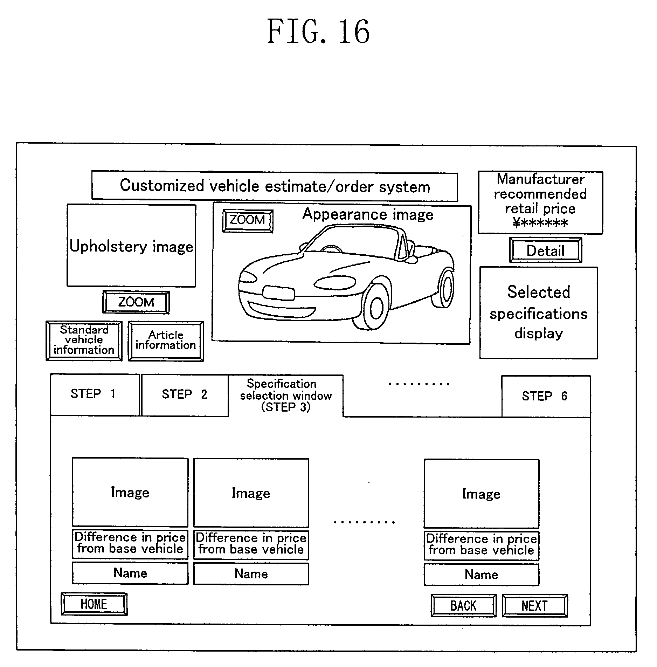

FIG. **16** is a diagram for showing an exemplified format of vehicle specification or configuration selection windows (**B-1** through **B-15**) to be displayed on the user terminal **5** by the vehicle specification or configuration selection processing (M2). The basic format of these windows is basically common to engine/transmission selection windows **B-1** and **B-8**, tire/wheel selection windows **B-2** and **B-9**, upholstery selection windows **B-3** and **B-10,** audio selection windows **B-4** and **B-11,** body color selection windows **B-5** and **B-12** and decoration part selection windows **B-6** and **B-13.**

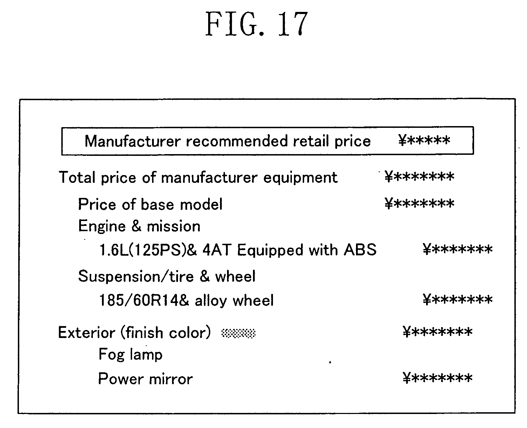

In an upper half area of each vehicle specification or configuration selection window, the followings are displayed: Photographs of appearance and upholstery of the customized vehicle selected by the user (purchase support information); a "ZOOM" button for expanding the photograph; an "article information" button for displaying various information (purchase support information) regarding the customized vehicle; a "standard vehicle information" button for displaying standard specification or configuration display window **B-7** or **B-14** including the specification or configuration and items of the standard vehicle corresponding to the base of the customized vehicle; a manufacturer recommended retail price per vehicle (i.e., per customized vehicle) having the specification or configuration selected by the user (namely, the selected specification or configuration input in the user terminal **5**); a "detail" button for displaying the details of the manufacturer recommended retail price as exemplified in FIG. **17;** and the specification or configuration items already selected by the user.

The purchase support information is selected from the data stored in the purchase support DB **33** correspondingly to the respective specifications or configuration and sent to the user terminal **5** by the manufacturer server **1.**

In this embodiment, since the manufacturer recommended retail price can be displayed in the specification or configuration selection window both as a price per vehicle and a price per specification or configuration item, the user can regard such prices as a standard in the specification or configuration selection of a desired customized vehicle, and thus, the convenience can be improved.

FIG. **17** is a diagram for showing an exemplified detail window of the manufacturer recommended retail price displayed when the "detail" button of FIG. **16** is operated. Thus, the manufacturer recommended retail price per vehicle, and selected specification or configuration items and their manufacturer recommended retail prices based on which the manufacturer recommended retail price per vehicle is set are displayed.

Furthermore, in the vehicle specification or configuration selection processing (M2), the selection windows from **B-1** to **B-6** in this order, when the type A is selected, and the selection windows from **B-8** to **B-13** in this order, when the type B is selected, are displayed on the user terminal **5**. Therefore, the user is restricted to make selection in this order of display windows. In a lower half area of each vehicle specification or configuration selection window, the selecting steps respectively corresponding to the windows **B-1** through **B-6** or **B-8** through **B-13** are displayed, for example, in the form of a plurality of overlapped folders.

In the exemplified window of FIG. **16**, the folder of the third step (namely, the upholstery selecting step) is selected to be displayed. In the selected folder (in an active state), selectable plural choices of the item to be selected by the user in the step are displayed with an image like a photograph, a price difference from that of the standard vehicle, a name (model number) and the like. When the user selects a desired choice (specification or configuration item) from the displayed choices, information of the selected specification or configuration item is stored in the storage **26** of the manufacturer server **1** together with the identification information (user ID) for specifying the user.

At this point, the manufacturer server **1** refers to the manufacturer recommended retail price DB **31** by using the selected specification or configuration item information as a key so as to fetch the manufacturer recommended retail price of the specification or configuration item, and adds the fetched manufacturer recommended retail price of the specification or configuration item to the price of specification or configuration items already selected in the previous steps.

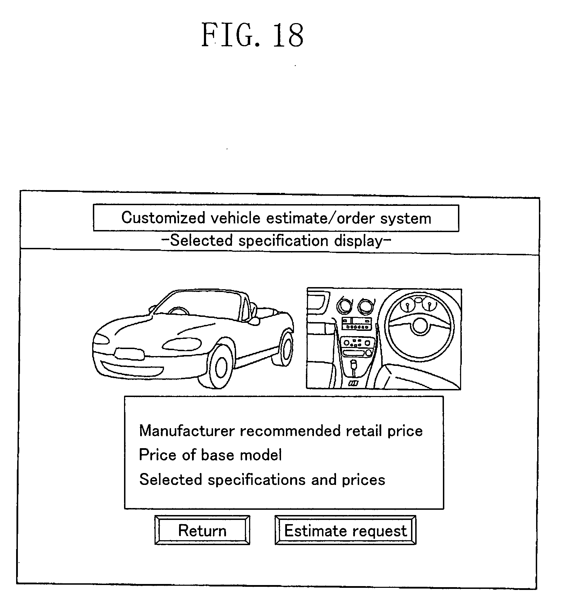

As a result, the manufacturer recommended retail price per vehicle displayed on the upper right portion of FIG. **17** is updated. Thereafter, when the "detail" button is selected, a column of the specification or configuration item selected in the current step and its manufacturer recommended retail price is additionally displayed in the detail display window exemplified in FIG. **18**.

In a lowermost area of each vehicle specification or configuration selection window, a "HOME" button for jumping to the home window **A-2** (of FIG. **16**) and "BACK" and "NEXT" buttons for transiting to display windows before and behind are displayed.

Predetermined restriction is previously put on the choices selectable by the user in each step of the vehicle specification or configuration selection processing (M2). As basic concept of the restriction, a specification or configuration item of a basic component determining the power performance of the vehicle should be selected in the first step of the specification or configuration selection of the customized vehicle. In addition, also at stages after the first step, restriction is put so that the specification or configuration item selected in the first step can be prior.

Such restriction information regarding the choices are previously stored in the purchase support DB **33** as information to be referred to as choices to be displayed on a window corresponding to the next step after the user selects a choice in each step of the vehicle specification or configuration selection window. When all the specification or configuration selections are made, the customize number of the customize vehicle of the user is determined.

Accordingly, when the selection operations are successively performed in the vehicle specification or configuration selection windows under such restriction, the user of the user terminal **5** can easily select a customized vehicle of the vehicle type selected in the home window **A-2** (shown in FIG. **15**) as if he/she was playing an interactive game. Thus, the user can enjoy a feeling similar to one an engineer of a vehicle tuning shop feels while tuning a vehicle.

When the selection is completed about all the items (steps) in the vehicle specification or configuration selection processing (M2), a selected specification or configuration display window **B-15** of FIG. **18** is displayed on the user terminal **5.** When the selection is thus completed, identification information (customize number) of the customized vehicle of the user is determined.

FIG. **18** is a diagram for showing an example of the selected specification or configuration display window **B-15** displayed on the user terminal **5** in the vehicle specification or configuration selection processing (M2). In this selected specification or configuration display window **B-15**, for example, photograph images of the appearance and the upholstery of the customized vehicle whose specification or configuration has been selected (which are purchase support information and are displayed by selecting images of a vehicle having the same specification as the selected specification from the purchase support information of the respective specifications or configurations stored in the purchase support DB **33**), the selected specification or configuration items and the prices thereof, the price of the standard vehicle and the like are displayed.

When the "estimate request" button is operated for requesting for an estimate of the dealer in the selected specification or configuration display window **B-15,** the selected specification or configuration items of the customized vehicle are settled, and the processing can transit to the estimate/assessment request processing (M3) described later. On the other hand, when a "return" button of the selected specification display window **B-15** is operated, the specification or configuration can be changed by successively returning to the vehicle specification or configuration selection windows respectively corresponding to the aforementioned steps.

### <Estimate/assessment request processing (M3)>

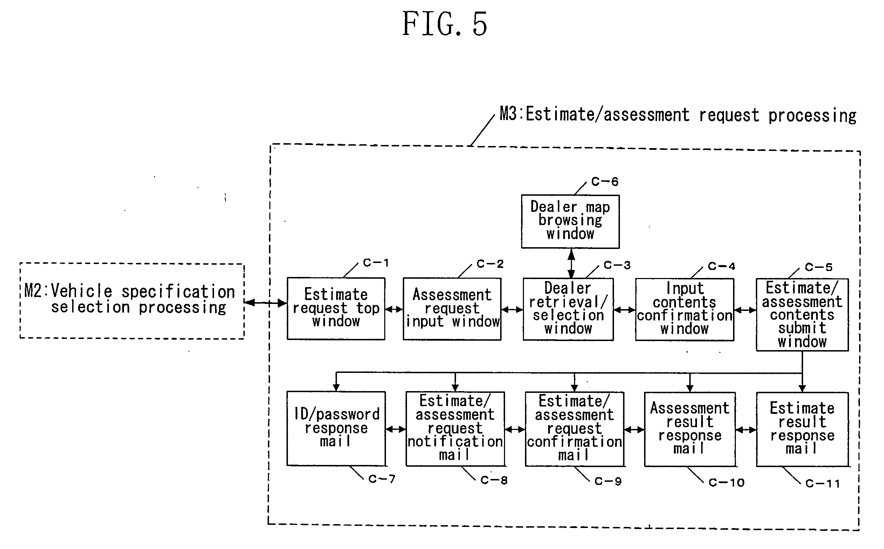

FIG. **5** is a diagram for showing the transition of display windows in the estimate/assessment request processing (M3) and an e-mail sending function involved in an estimate/assessment request. This processing is activated by operating the "estimate request" button after the specification or configuration selection of the customized vehicle in the vehicle specification or configuration selection processing (M2). The estimate/assessment request processing (M3) can be transit to the vehicle specification or configuration selection processing (M2) in accordance with the operation performed by the user.

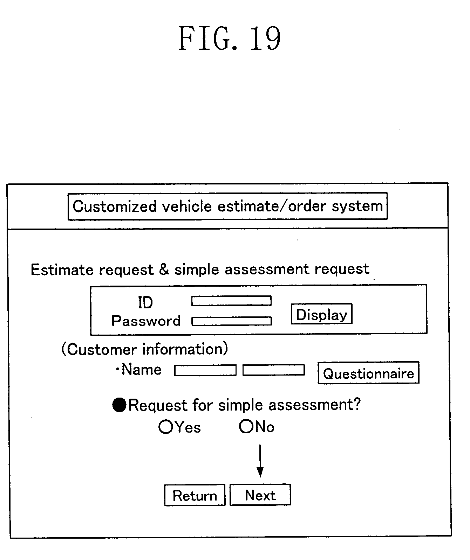

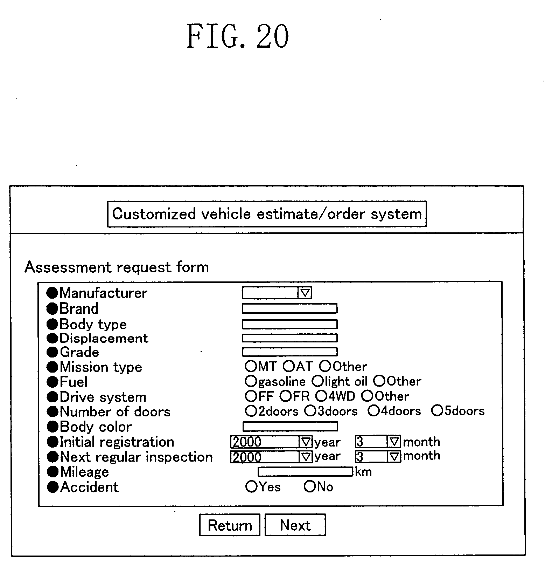

As shown in FIG. **5,** as display windows transit in the estimate/assessment request processing (M3), an estimate request top window **C-1** (shown in FIG. **19**), an assessment request input window **C-2** (shown in FIG. **20**), a dealer retrieval/selection window **C-3,** an input contents confirmation window **C-4,** an estimate/assessment contents submit window **C-5** and a dealer map browsing window **C-6** can be displayed on the user terminal **5.**

Estimate request top window **C-1** (shown in FIG. **19**): In this window, when the user of the user terminal **5** inputs the name of the user (the user ID and the password when already issued), the user can request (demand) for an estimate of the customized vehicle previously determined in the vehicle specification or configuration selection processing (M2) and for assessment of a trade-in vehicle if desired. In other words, after inputting the information related to the user in the estimate request top window **C-1**, when "YES" is selected with respect to an assessment request in the same window, the assessment request input window **C-2** is displayed, and when "NO" is selected, the dealer retrieval/selection window **C-3** is displayed.

Assessment request input window **C-2** (shown in FIG. **20**): In this window, the user of the user terminal **5** inputs predetermined specification or configuration items (such as the name of the manufacturer, the brand of the vehicle, the displacement and the mileage) of a vehicle to be trade-in (a trade-in vehicle), and when a "Next" button is selected, the dealer retrieval/selection window **C-3** is displayed.

Dealer retrieval/selection window **C-3** (not shown in any drawing): In this window, the user of the user terminal **5** can select and specify a dealer of which the user desires to request for an estimate of the customized vehicle and assessment of the trade-in vehicle by using the user terminal **5**. For specifying a dealer, for example, dealers in the neighborhood of the address of the user previously input in the estimate request top window **C-1** may be automatically presented, or a list of all the dealers may be displayed so that the user can select a desired one in the list. In either case, it is convenient for the user if the dealer map browsing window **C-6** in which the location of each dealer can be found on a map can be expanded from the dealer retrieval/selection window **C-3.**

When the dealer for asking for the estimate and the assessment of the trade-in vehicle is selected in the dealer retrieval/selection window **C-3** by the user, the input contents confirmation window **C-4** is displayed on the user terminal **5** of the user.

Input contents confirmation window **C-4** (not shown in any drawing): In this window, the following information are displayed in the form of a list: The contents of the specification or configuration of the customized vehicle previously determined in the vehicle specification or configuration selection processing (M2) (including the manufacturer recommended retail price); the contents of the items input by the user in the assessment request input window **C-2** if the assessment of a trade-in vehicle is selected; and information related to the dealer specified in the dealer retrieval/selection window **C-3** for requesting for the estimate/assessment. After the user confirms the contents of the information displayed in the input contents confirmation window **C-4**, when the user actually requests for the estimate/assessment through a predetermined operation, the operation signal is sent to the manufacturer server **1**, and the estimate/assessment contents submit window **C-5** is displayed on the user terminal **5**. (Thereafter, processing for guiding the customer to purchase of the vehicle is performed).

Estimate/assessment contents submit window **C-5** (not shown in any drawing): In this window, information that the estimate/assessment request is accepted by the manufacturer server **1** having received the estimate/assessment request (the operation signal) and that an e-mail regarding the request will be sent to the user from the dealer selected by the user are displayed. Thus, the estimate/assessment request processing (M3) includes a function to send/receive e-mails in response to the estimate/assessment request sent from the user terminal **5**.

ID/password reply mail **C-7**: When the estimate request thus sent from the user is the first request, an e-mail including issued ID and password is sent to the mail address previously input by the user.

Estimate/assessment request notification mail **C-8:** An e-mail is sent from the manufacturer server **1** to the dealer server **2** of the selected dealer to notify that the dealer is requested for the estimate of the customized vehicle (and the assessment of the trade-in vehicle) by the user. This e-mail includes, for example, information for specifying the user (such as the address, the name and the mail address) input in the estimate request top window **C-1**, the specification or configuration of the customized vehicle to be estimated, and the specification or configuration items of the trade-in vehicle input in the assessment request input window **C-2**.

Estimate/assessment request confirmation mail **C-9:** An e-mail is sent, in the name of the dealer requested for the estimate of the customized vehicle and/or the assessment of the trade-in vehicle by the user, to the mail address previously input by the user for confirming the estimate/assessment request.

Assessment result response mail **C-10**: An e-mail for informing an assessment result is sent to the mail address previously input by the user from the dealer requested for the assessment of the trade-in vehicle by the user.

Estimate result response mail **C-11**: An e-mail for informing an estimate result is sent, in the name of the dealer requested for the estimate by the user, to the mail address previously input by the user.

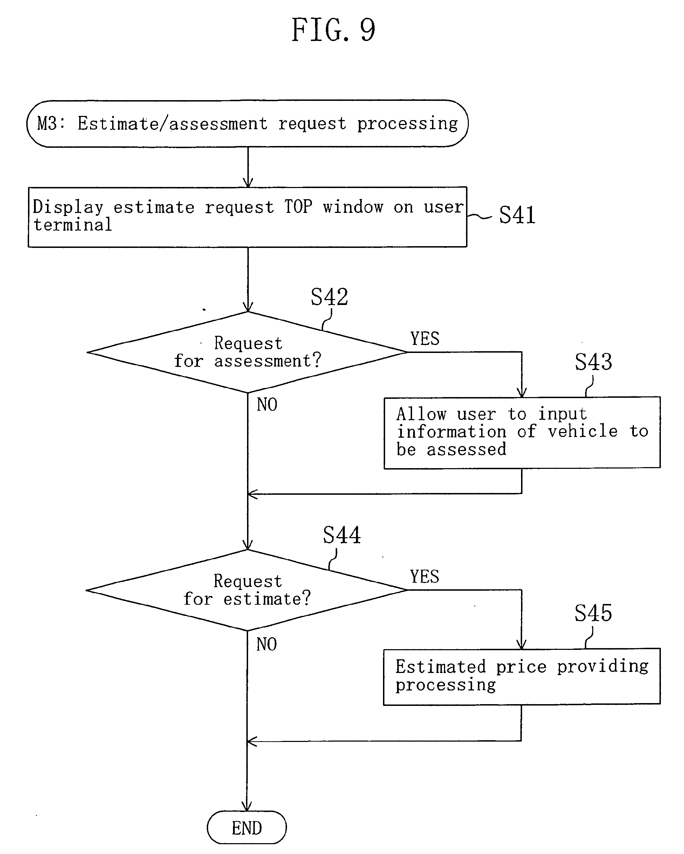

FIG. **9** is a flowchart of the estimate/assessment request processing (M3) executed by the manufacturer server **1.**

Step S41: The estimate request top window **C-1** (shown in FIG. **19**) is displayed on the user terminal **5,** and validity of the user ID and the password input in this window is checked.

Steps S42 and S43: It is determined whether or not an assessment request has been received (step S42). When an assessment request has not been received, the flow proceeds to step S44. When an assessment request has been received, the assessment request input window **C-2** (shown in FIG. **20**) is displayed on the user terminal **5** for allowing the user to input the information of the trade-in vehicle desired to be assessed, and the dealer retrieval/selection window **C-3** is displayed on the user terminal **5** for allowing the user to select a desired dealer. The input information is sent to the selected dealer by the estimate/assessment request notification mail **C-8** (step S43).

Steps S44 and S45: It is determined whether or not an estimate request (estimate demand) has been received (step S44). When an estimate request has been received, the estimated price providing processing for providing an estimated price of the customized vehicle from the manufacturer server **1** to the user terminal **5** is performed. Specifically, the estimated price is automatically calculated on the basis of the customize number of the customized vehicle selected in the vehicle specification or configuration selection processing (M2) and the estimated price is sent to the mail address previously input by the user by e-mail.

The dealer having received the assessment request assesses the trade-in vehicle in accordance with the specification or configuration items thereof obtained by the assessment request notification mail **C-8**. This assessment may be made in a conventional manner in which a person in charge of the dealer actually confirms the trade-in vehicle or automatically by referring to a database or the like in which the market prices of used vehicles are stored.

### <Estimate items confirmation processing (M4)>

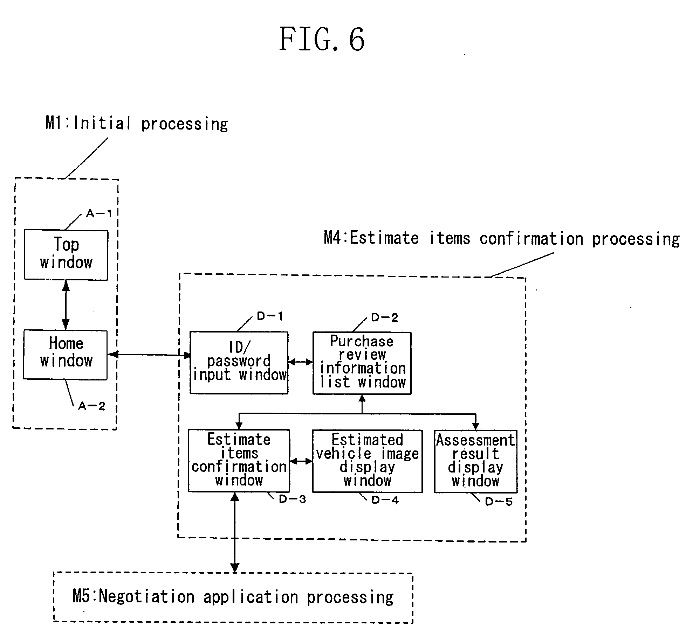

FIG. **6** is a diagram for showing transition of display windows in the estimate items confirmation processing (M4). This window is activated by operating the operation button of the "purchase review list" in the home window **A-2** displayed in the initial processing (M1). The estimate items confirmation processing (M4) can be transit to the initial processing (M1) or the negotiation application processing (M5) in accordance with the operation performed by the user.

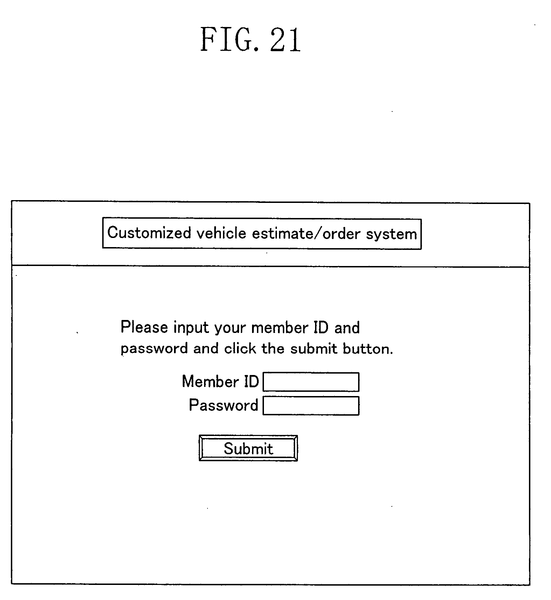

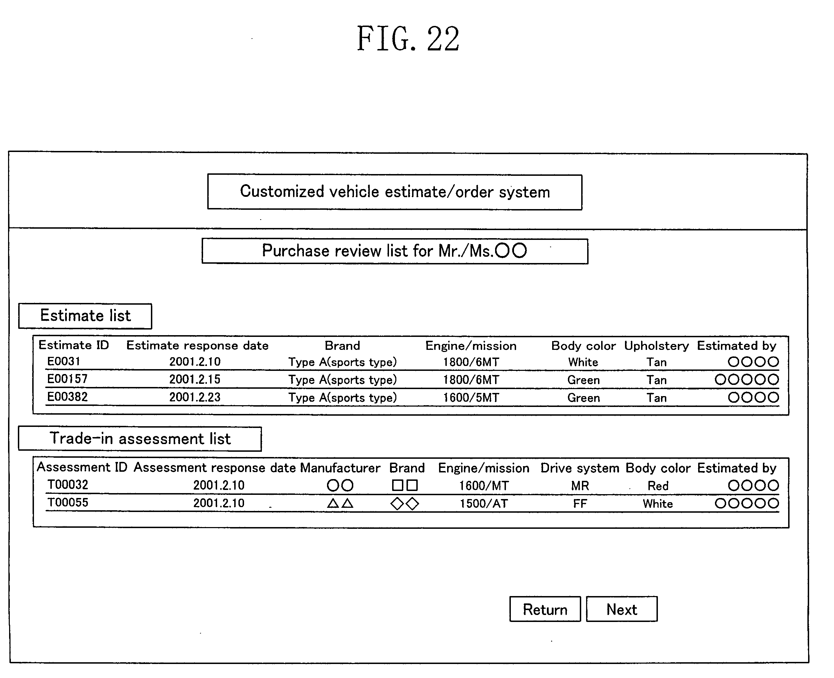

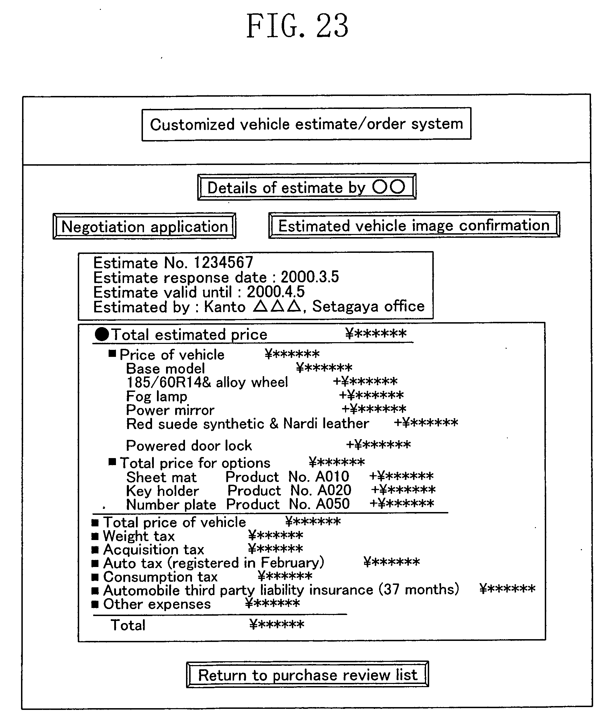

As shown in FIG. **6,** as display windows transit in the estimate items confirmation processing (M4), an ID/password input window **D-1** (shown in FIG. **21**), the purchase review information list window **D-2** (shown in FIG. **22**), an estimate items confirmation window **D-3** (shown in FIG. **23**), an estimated vehicle image display window **D-4** and a trade-in assessment result display window **D-5** can be displayed on the user terminal **5.**

ID/password input window **D-1** (shown in FIG. **21**): In this window, the user inputs the user ID (member ID) and the password previously issued to the user and operates a "submit" button, so as to log in the present system (the vehicle manufacture server **1**). After completing logging in, the purchase review information list window **D-2** (shown in FIG. **22**) is displayed on the user terminal.

Purchase review information list window **D-2** (shown in FIG. **22**): In this window, a list of results of the estimate and the assessment regarding the customer is displayed. When the user selects a desired item by clicking or the like, a window including the detailed contents of the selected item is displayed on the user terminal **5** of the user.

Estimate items confirmation window **D-3** (shown in FIG. **23**): In this window, the user can confirm the detailed contents of the estimate previously presented to the user. When a "negotiation application" button is operated, the processing can be transit to the negotiation application processing (M5). When an "estimated vehicle image confirmation" button is operated, the image of a vehicle corresponding to the currently displayed customized vehicle can be confirmed in the estimated vehicle image display window **D-4** (not shown in any drawing). When a "return to purchase review list" button is operated, the window can be transit to the purchase review information list window **D-2** (shown in FIG. **22**).

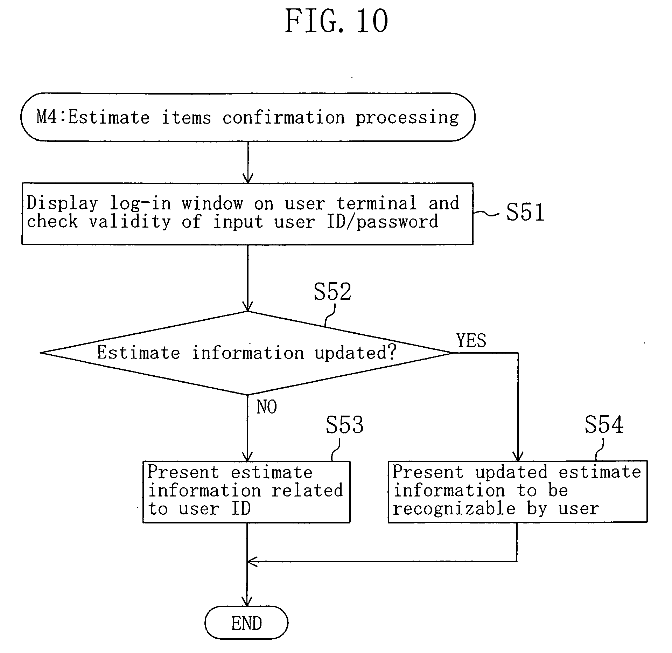

FIG. **10** is a flowchart for showing the estimate items confirmation processing (M4) executed by the manufacturer server **1**.

Step S51 of FIG. **10:** The log-in window, namely, the ID/password input window **D-1** (shown in FIG. **21**) is displayed on the user terminal **5,** and the validity of the user ID and the password input in the window is checked.

Step S52: Referring to the customer DB **34**, it is determined whether or not the estimate information related to the user ID has been updated.

Step S53: The estimate information related to the user ID stored in the customer DB **34** is fetched, and the fetched estimate information is displayed on the user terminal **5** of the user in the form of the purchase review information list window **D-2** (shown in FIG. **22**) or the estimate items confirmation window **D-3** (shown in FIG. **23**) in accordance with an operation performed in the purchase review information list window **D-2**.

Step S54: The updated estimate information related to the user ID stored in the customer DB **34** is displayed on the user terminal **5** of the user in the form of the purchase review information list window **D-2** (shown in FIG. **22**) or the estimate items confirmation window **D-3** (shown in FIG. **23**) in accordance with an operation performed in the purchase review information list window **D-2,** with the update recognizable by the user.

### <Negotiation application processing (M5)>

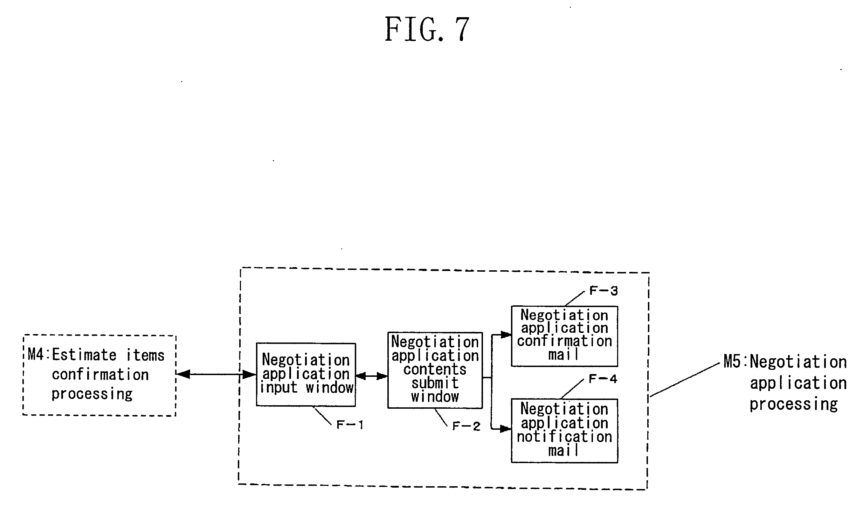

FIG. **7** is a diagram for showing transition of display windows in the negotiation application processing (M5) and an e-mail sending function involved in a negotiation application. The negotiation application processing (M5) is activated by operating the "negotiation application" button in the estimate items confirmation window **D-3** (shown in FIG. **23**). The negotiation application processing (M5) can be transit to the estimate items confirmation processing (M4).

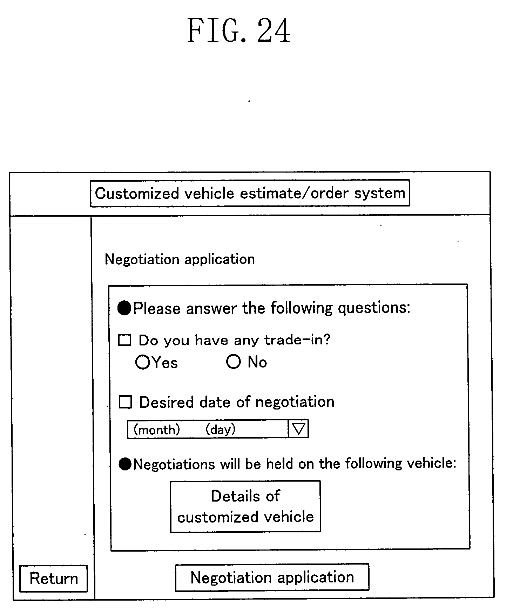

As display windows transit in the negotiation application processing (M5), a negotiation application input window **F-1** (shown in FIG. **24**) and a negotiation application contents submit window F-2 can be displayed on the user terminal **5** of the user.

Negotiation application input window **F-1** (shown in FIG. **24**): In this window, the user can input various items (including whether or not the user has a trade-in vehicle and a desired date for the negotiations) for entering into negotiations with the dealer having presented the estimate of the customized vehicle displayed in the estimate items confirmation window **D-3** (namely, the dealer selected by the user). After inputting the items, when a "negotiation application" button is operated, the negotiation application contents submit window **F-2** is displayed on the user terminal **5**.

Negotiation application contents submit window **F-2** (not shown in any drawing): In this window, information that the application contents input in the negotiation application input window **F-1** has been sent and accepted by the manufacturer server **1** and that the selected dealer will contact the user about the negotiations by e-mail or telephone are displayed.

The negotiation application processing (M5) includes a function to send/receive e-mails in response to the negotiation application information sent in the negotiation application contents submit window **F-2** from the user terminal **5**.

Negotiation application confirmation mail **F-3**: An e-mail is sent from the manufacturer server **1** to the mail address previously input by the user for confirming that the negotiation application has been made.

Negotiation application notification mail **F-4**: An e-mail is sent from the manufacturer server **1** to the selected dealer for notifying that the negotiation application has been made by the user. This e-mail includes the contents displayed in the negotiation application input window **F-1** and the information related to the user.

In this embodiment, in the case where the customer makes a purchase contract for the customized vehicle having the selected specification or configuration after the negotiations in the dealer, a person in charge of the dealer performs a predetermined operation in the dealer server **2** or the dealer terminal **4**. Thus, the customized vehicle is ordered from the manufacturer, and information of the purchase contract of the customer and the specification or configuration of the vehicle related to the purchase contract are sent from the dealer server **2** to the manufacturer server **1** and the plant server **11.** In the manufacturer server **1,** the contracted specification or configuration display processing described below is executed.

### (3) Estimated price providing processing:

The estimated price providing processing performed in step S45 of the estimate/assessment request processing (M3) executed by the CPU **21** of the manufacturer server **1** will now be described in detail with reference to FIG. **11.**

Step S31: Data set by the dealer selected by the customer is read from the estimated price DB **35**, and an estimated price corresponding to the customize number of the customized vehicle selected in the vehicle specification or configuration selection processing (M2) is calculated.

Step S32: The estimated price calculated in step S31 is automatically corrected in consideration of prescribed information regarding the customer. The prescribed information is information regarding the customer (such as a history of onerous services provided by the dealer, the number of possessed vehicles, a parking place, a history of accesses made to the manufacturer server **1** for the specification or configuration selection, the time of previous vehicle purchase, information of the previous vehicle purchase (such as an estimated price), environmental change, and the genre of a possessed vehicle). The estimated price is corrected on the basis of the information by a value previously set for the correction.

Step S33: A warning processing is executed. Specifically, the validity of the estimated price automatically corrected in step S32 is checked by comparing with a reference price zone previously set by each dealer. When the estimated price is not valid, the dealer server **2** is warned, so that the estimated price can be modified or kept.

Step S34: The estimated price having been corrected or having been modified after the correction is sent to the mail address (the user terminal **5**) previously input by the customer by e-mail, and is stored in the customer DB **34** in association with the user ID. This e-mail includes a URL, and details of the estimated price can be confirmed in a window for displaying the estimate result by accessing a page specified by the URL by operating the user terminal **5**. If the estimated price is lower or around a reference lowest price, the e-mail has contents for appealing this estimated price.

Step S35: An e-mail that the estimated price has been presented to the customer is sent to the dealer server **2**.

### (4) Contracted specification or configuration display processing:

The contracted specification or configuration display processing executed by the CPU **21** of the manufacturer server **1** will now be described on the basis of a flowchart shown in FIGS. **12** and **13**.

First, in step S101 of FIG. **12,** it is determined whether or not contract information (i.e., information that a customer has made a purchase contract and the specification or configuration information of a vehicle related to the purchase contract, which are sent by the predetermined operation of the dealer server **2** or the dealer terminal **4**) sent from the dealer server **2** has been received. When NO, namely, when contract information has not been received, the flow directly proceeds to step S104. When YES, namely, when contract information has been received, the specification or configuration information of the vehicle related to the purchase contract is stored in the contracted information DB **36** (step S102). In next step S103, vehicle identification information (such as a body number or a license number) for specifying the vehicle is determined, and the vehicle identification information is stored in the contracted information DB **36** correspondingly to the specification or configuration information, and then, the flow proceeds to step S104.

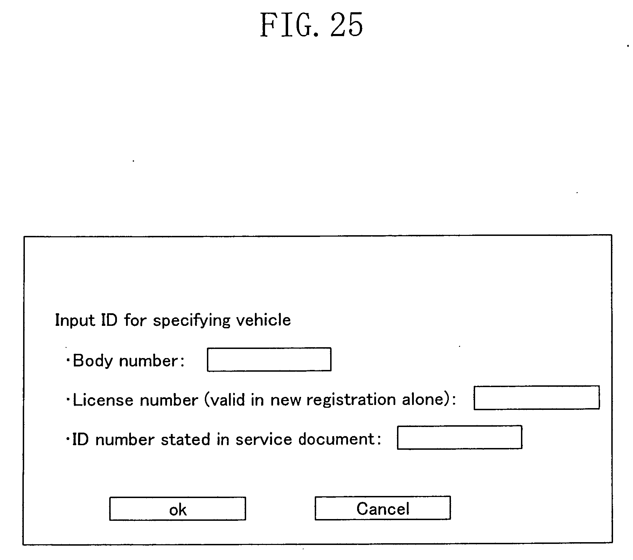

In step S104, it is determined whether or not the operation button of "confirmation of contracted vehicle specification or configuration" in the home window **A-2** (shown in FIG. **15**) displayed on the user terminal **5** has been operated. When NO, namely, when the operation button has not been operated, the flow proceeds to step S112 of FIG. **13** described below. When YES, namely, when the operation button has been operated, the flow proceeds to step S105, where a vehicle identification information input window as shown in FIG. **25** is sent to be displayed in the user terminal **5**. In this vehicle identification information input window, a body number, a license number (which is valid merely in registration of a new vehicle because the license number may be changed in transfer and the like) or an ID number stated in a service document is input as the vehicle identification information.

In next step S106, it is determined whether or not an "ok" button has been operated after the input of the vehicle identification information in the vehicle identification information input window. When NO, namely, when the vehicle identification information has not been input or the "ok" button has not been operated, the flow proceeds to step S112. When YES, namely, when the vehicle identification information has been input and the "ok" button has been operated, the flow proceeds to step S107. In step S107, the specification or configuration information of the vehicle corresponding to the vehicle identification information is retrieved from the contracted information DB **36**, and the result of the retrieval is sent to the user terminal **5** so as to be displayed as a retrieval result display window. In the case where it is found through the retrieval that there is no corresponding vehicle identification information, the absence is displayed on the user terminal **5**.

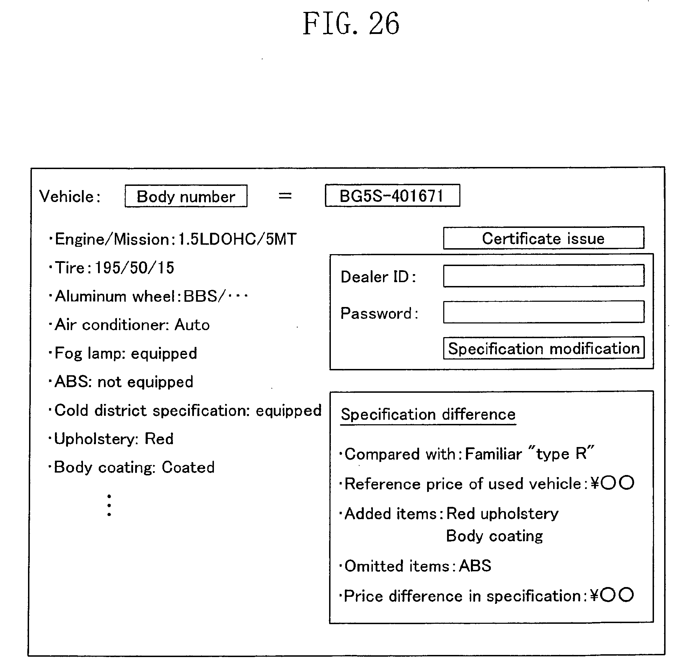

In the retrieval result display window, as exemplified in FIG. **26**, a list of the specification or configuration items of the vehicle corresponding to the input vehicle identification information is displayed together with a name of a catalogue model having a specification or configuration closest to that of the vehicle, a standard price in the used vehicle market of the catalogue model, a specification or configuration difference between the vehicle corresponding to the vehicle identification information and the catalogue model and the like. Thus, without confirming each specification or configuration item of the vehicle displayed on the terminal, the specification or configuration of the vehicle can be easily grasped by comparing with that of the existing catalogue model. For example, in the specification or configuration of the vehicle shown in FIG. **26**, red upholstery and body coating are added to and ABS is removed from the "type R" specification or configuration. Also in the exemplified window, the standard price in the used vehicle market of the catalogue model and a price difference corresponding to the specification or configuration difference from the catalogue model are displayed, so that an appropriate price for resale as a used vehicle of this vehicle can be easily set.

Furthermore, as shown in FIG. **26**, the retrieval result display window includes a "certificate issue" button to be operated when a certificate for certifying the specification or configuration of the vehicle displayed in the window is desired to be issued, and a "specification or configuration modification" button to be operated when the specification or configuration information of the vehicle stored in the contracted information DB **36** is desired to be modified because the specification or configuration has been actually changed. When the "specification or configuration modification" button is to be operated, identification information and a password of a dealer of an option involved in the specification or configuration modification of the vehicle are input before operating the "specification or configuration modification" button.

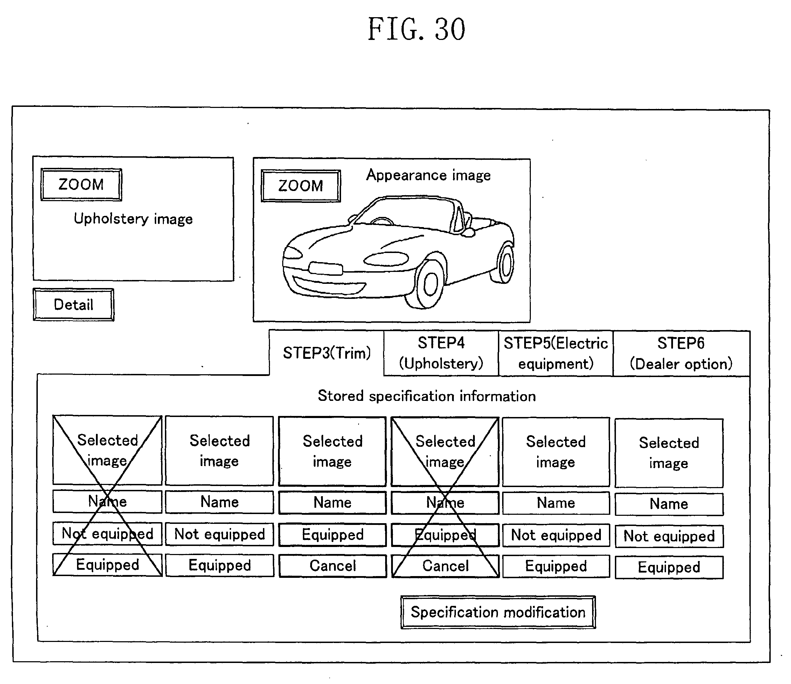

It is determined in step S108 of FIG. **13** whether or not the "specification or configuration modification" button has been operated. When NO, namely, the button has not been operated, the flow proceeds to step S110. When YES, namely, when the button has been operated, the flow proceeds to step S109, where a specification or configuration modification window is sent to be displayed in the user terminal **5**, so that processing for modifying the specification or configuration information of the vehicle can be performed in accordance with the operation of the user terminal **5** by the user (contracted specification or configuration modification). Specifically, the specification or configuration modification window is similar to the vehicle specification or configuration selection window (shown in FIG. **16**) as exemplified in FIG. **30.** In an upper half area of the window, the images of the appearance and the upholstery of the selected vehicle, "ZOOM" buttons for expanding these images, and a "detail" button for displaying detail information of the vehicle are displayed.

In a lower half area of the specification or configuration modification window, folders are displayed in which the specification or configuration can be modified with respect to the specification or configuration items such as the trim, the upholstery, the electric equipment and the dealer option. Folders corresponding to the engine and the driving system are not displayed because these specification or configuration items cannot be modified after the purchase. In each folder, options that can be equipped on the vehicle are displayed to be selected, and options that cannot be equipped cannot be selected. Specifically, with respect to a currently selectable option in each specification or configuration item of the vehicle, an "equip" button is displayed in an active state. Also, an already equipped item is displayed within a bold frame, with respect to which a "cancel" button is displayed in an active state. On the other hand, items that cannot be equipped or canceled (which are crossed in FIG. **30**) are displayed in an inactive state.

In the case where the specification or configuration of the actual vehicle is modified by adding an option later, the option is selected and then a "modification" button is operated in the specification or configuration modification window, and the specification or configuration item related to the selected option is modified and stored in the specification or configuration information of the vehicle stored in the contracted information DB **36**. Since the specification or configuration information of the vehicle stored in the contracted information DB **36** can be modified after the purchase contract in this manner, the specification or configuration information of the vehicle can be updated to accurately accord with the specification or configuration of the actual vehicle. In addition, since the identification information and the password of the dealer of the option should be input in updating the data, unauthorized data update can be prevented.

After step S108 or S109, it is determined in step S110 whether or not the "certificate issue" button in the retrieval result display window has been operated. When NO, namely, when the button has not been operated, the flow proceeds to step S112. When YES, namely, when the button has been operated, the flow proceeds to step S111, where the certificate is printed by the printer **12** to be issued (and sent to an address specified by the user), and then, the flow proceeds to step S112.

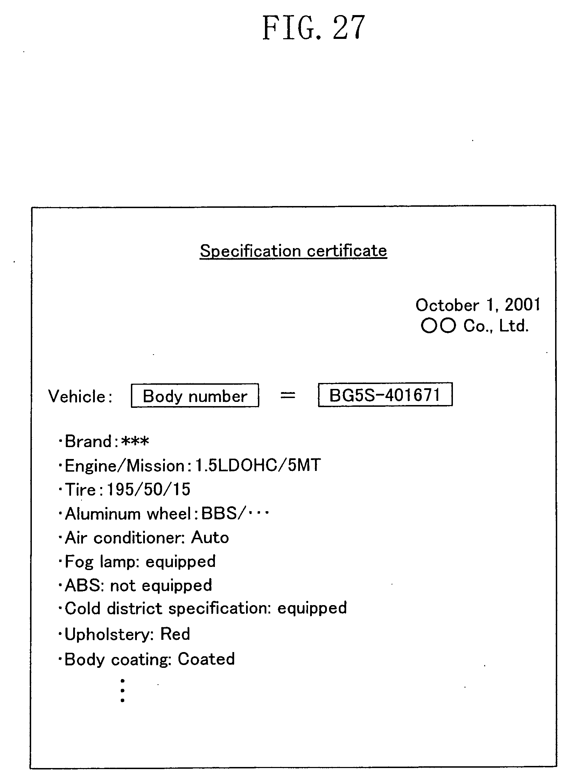

The certificate is exemplified in FIG. **27,** in which not only the specification or configuration of the vehicle but also the vehicle identification information such as the body number is stated. Although the certificate is issued when the user desires as described above, it may be automatically issued when or after the vehicle identification information is determined.

In step S112, it is determined whether or not the dealer server **2** or the plant server **11** has requested for confirmation of the storage of the vehicle identification information specified by the server **2** or **11** in the contracted information DB **36.** When NO, namely, when the server has not requested for the confirmation, the flow directly proceeds to step S114. When YES, namely, when the server has requested for the confirmation, the flow proceeds to step S113, where the manufacturer server **1** replies to the dealer server **2** or the plant server **11** whether or not the vehicle identification information is stored in the contracted information DB **36,** and then, the flow proceeds to step S114.

In step S114, it is determined whether or not the dealer server **2** or the plant server **11** has requested for read of the specification or configuration information corresponding to the vehicle identification information specified by the dealer **2** or **11**. When NO, namely, when the server has not requested for the read, the flow directly returns. When YES, namely, when the server has requested for the read, the flow proceeds to step S115, where the specification or configuration information of the vehicle corresponding to the vehicle identification information is replied to the dealer server **2** or the plant server **11**, and then, the flow returns.

The procedures of steps S112 through S115 are performed for the following reason: When the dealer server **2** or the plant server **11** issues a certificate for certifying the specification or configuration of a vehicle estimated/ordered by using the present system, the server inquires of the manufacturer server **1** about the presence of the vehicle identification information of the vehicle. When the vehicle identification information is stored, it is determined that the vehicle was selected in its specification or configuration by using the present system, and hence the specification or configuration information of the vehicle corresponding to the vehicle identification information is requested to be sent. These procedures are performed to respond to such inquiry and request.

### - Software executed by dealer server 2 -

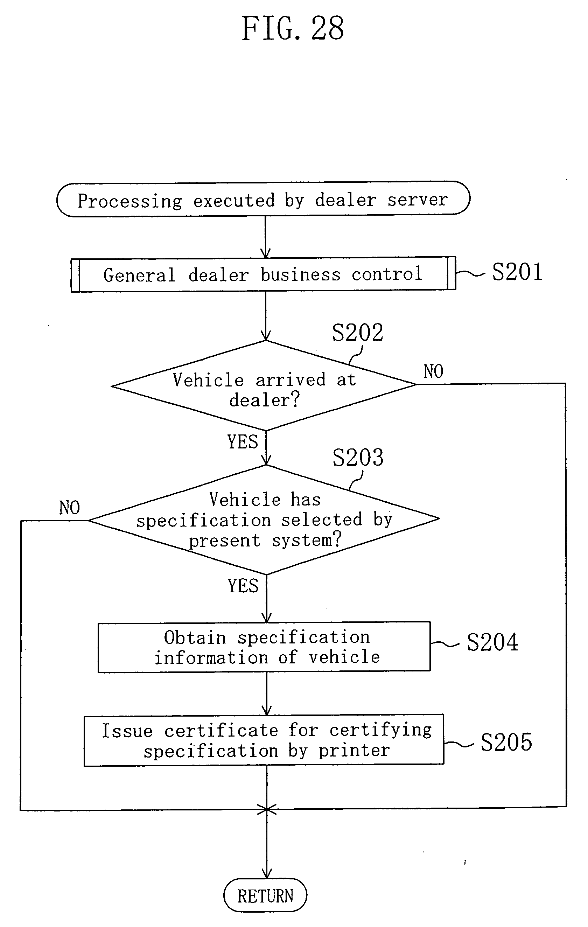

Next, software executed by the CPU **21** of the dealer server **2** will be described with reference to FIG. **28**.

In first step S201, general dealer business control is executed, and in next step S202, it is determined whether or not a vehicle has arrived at the dealer. This determination is made on the basis of data input performed at receipt of a vehicle. A vehicle having arrived at the dealer has a body number already determined.

When NO in step S202, namely, when a vehicle has not arrived, the flow directly returns. When YES, namely, when a vehicle has arrived, the flow proceeds to step S203.

In step S203, it is determined whether or not the vehicle is a vehicle whose specification or configuration was selected by using the present system (namely, a customized vehicle). At this determination, the manufacturer server **1** is requested to confirm whether or not identification information of the vehicle such as a body number (namely, the vehicle identification information) is stored in the contracted information DB **36.** In response to the reply (see step S113 of the contracted specification or configuration display processing executed by the manufacturer server **1**), when the vehicle identification information is stored, it is determined that the vehicle is a customized vehicle, and when not, it is determined that the vehicle is not a customized vehicle (namely, is a catalogue model).

When NO in step S203, namely, when the vehicle is not a customized vehicle, the flow directly returns. When YES, namely, when the vehicle is a customized vehicle, the flow proceeds to step S204, where the manufacturer server **1** is requested to read the specification or configuration information of the vehicle from the contracted information DB **36** and to send the read information (see step S115 of the contracted specification or configuration display processing executed by the manufacturer server **1**).

In step S205, a certificate for certifying the specification or configuration of the vehicle is printed by the printer **13** to be issued (which certificate is given to the user together with the vehicle), and then, the flow returns.

The certificate is the same as that issued in step S111 of the contracted specification or configuration display processing executed by the manufacturer server **1**, and hence, it is not always necessary to issue the certificate at the time of the arrival of the vehicle at the dealer. If the certificate is issued at this point, there is no need to issue it in step S111 or issued in step S111 premised on accounting in case of loss of the certificate. Furthermore, in the case where the certificate is issued on the manufacture line as described below, there is no need to issue the certificate at the time of the arrival of the vehicle at the dealer, and on the contrary, if the certificate is issued at this point, there is no need to issue it on the manufacture line.

The certificate issued in step S205 may be included in a warranty, an instruction manual, a vehicle inspection document or the like. In this case, in step S202, instead of determining whether or not the vehicle has arrived at the dealer, it is determined whether or not a program for printing a warranty, an instruction manual, a vehicle inspection document or the like has been activated for inputting the vehicle identification information, and the certificate is printed simultaneously with the warranty or the like in step S205.

### - Software executed by plant server 11 -

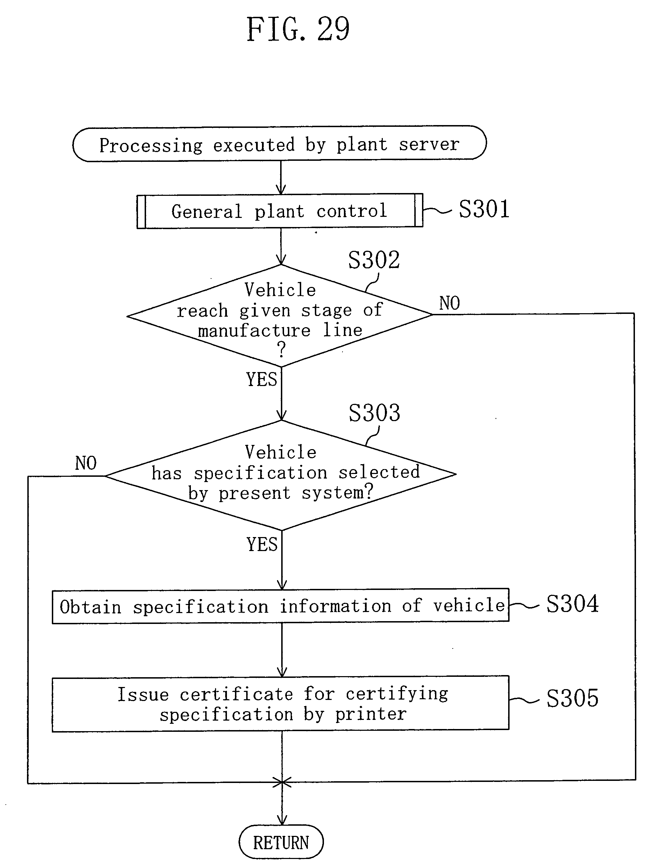

Next, software executed by the CPU **21** of the plant server **11** will be described with reference to FIG. **29.**

Specifically, in first step S301, general plant control is executed, and in next step S302, it is determined whether or not a vehicle has reached a given stage of the manufacture line (namely, a stage at which its body number has already been determined).

When NO in step S302, namely, when a vehicle has not reached the given stage, the flow directly returns. When YES, namely, when a vehicle has reached the given stage, the flow proceeds to step S303, where it is determined whether or not the vehicle is one whose specification or configuration was selected by using the present system (namely, a customized vehicle) in the same manner as in step S203 of the processing executed by the dealer server **2**. When NO, namely, when the vehicle is not a customized vehicle, the flow directly returns. When YES, namely, when the vehicle is a customized vehicle, the flow proceeds to step S304, where the specification or configuration information of the vehicle is obtained in the same manner as in step S204 of the processing executed by the dealer server **2.**

In step S305, a certificate for certifying the specification or configuration of the vehicle is issued by the printer **14** (which certificate is given to the user together with the vehicle), and then, the flow returns.

The certificate issued in step S305 may be included in a warranty or an instruction manual, or may be directly marked or adhered as a seal on the body of the vehicle.

In this embodiment, in the case where the manufacturer server **1** issues a certificate, the manufacturer server **1** corresponds to a computer apparatus connected to the user terminal **5** via the communications lines, and the storage **26** of the manufacturer server **1** corresponds to a computer readable recording medium in which a control program for the sales support system (sales support program) is stored. Also, the communication interface **27** of the manufacturer server **1** corresponds to specification or configuration receiving means for receiving a selected specification or configuration input in and sent from the user terminal **5**; purchase support information submitting means for sending purchase support information to the user terminal **5**; and operation signal receiving means for receiving an operation signal sent from the user terminal **5** through a predetermined operation performed by a customer after inputting the specification or configuration.

Furthermore, the CPU **21** of the manufacturer server **1** corresponds to purchase support information selecting means for selecting, from purchase support information of vehicles stored in the purchase support DB **33**, the purchase support information regarding a vehicle having a specification or configuration identical to the selected specification or configuration received by the specification or configuration receiving means; and purchase guiding means for receiving the operation signal received by the operation signal receiving means and guiding a customer to purchase of a vehicle having a specification or configuration identical to the selected specification or configuration. The printer **11** connected to the manufacturer server **1** corresponds to certificate issuing means for issuing a certificate for certifying the specification or configuration of a vehicle related to a purchase contract.

On the other hand, in the case where the dealer server **2** or the plant server **11** issues a certificate, the dealer server **2** or the plant server **11** corresponds to a computer apparatus connected to the user terminal **5** and the manufacturer server **1** via the communication lines, and the storage **26** of the dealer server **2** or the plant server **11** corresponds to a computer readable recording medium in which the control program for the sales support system is stored. Also, the printer **13** connected to the dealer server **2** or the printer **14** connected to the plant server **11** corresponds to certificate issuing means for issuing a certificate for certifying the specification or configuration of a vehicle.

The manufacturer server **1** allows the user terminal **5** to display, in the retrieval result display window, the specification or configuration of a vehicle corresponding to vehicle identification information input in the user terminal **5**. Therefore, the communication interface **27** of the manufacturer server **1** corresponds to identification information receiving means for receiving the identification information of a vehicle related to a purchase contract (namely, the vehicle identification information) input to and sent from the user terminal **5** after the purchase contract for the vehicle of the customer; specification or configuration submitting displaying means for sending the specification or configuration of the vehicle to the user terminal **5** having sent the identification information to be displayed in the user terminal **5** in response to the receipt of the identification information of the vehicle related to the purchase contract received by the identification information receiving means; and customer specifying information receiving means for receiving information for specifying a customer input to and sent from the user terminal **5**.

Accordingly, in this embodiment, after a customer makes a purchase contract for a vehicle, a certificate for certifying the specification or configuration of the vehicle related to the purchase contract is issued, or in response to identification information of the vehicle related to the purchase contract input to and sent from the user terminal **5,** the specification or configuration of the vehicle is sent to be displayed in the user terminal **5** having sent the vehicle identification information. As a result, not only the customer but also a used vehicle dealer to which the vehicle has been transferred from the customer and a repair shop of which the customer has requested to repair the vehicle can easily check the specification or configuration of the vehicle. In addition, the customer, the used vehicle dealer and the like can definitely and easily certify the specification or configuration of the vehicle if necessary, which is very convenient.

### ALTERNATIVE EMBODIMENTS

In the aforementioned embodiment, in response to vehicle identification information input to the user terminal **5**, the manufacturer server **1** allows the user terminal **5** to display the specification or configuration of the vehicle corresponding to the vehicle identification information in the retrieval result display window. Alternatively, the dealer server **2** or the plant server **11** may similarly allow the user terminal **5** to display the specification or configuration of the vehicle corresponding to the vehicle identification information in response to the input of the vehicle identification information in the user terminal **5**. In this case, the dealer server **2** or the plant server **11** corresponds to a computer apparatus connected to the user terminal **5** and the manufacturer server **1** via the communications lines, and the storage **26** of the dealer server **2** or the plant server **11** corresponds to a computer readable recording medium in which the control program for the sales support system is or can be stored. Also, the communication interface **27** of the dealer server **2** or the plant server **11** corresponds to identification information receiving means for receiving vehicle identification information related to a purchase contract input in and sent from the user terminal **5** after making the purchase contract, and the CPU **21** of the dealer server **2** or the plant server **11** corresponds to specification or configuration submitting displaying means for sending the specification or configuration of the vehicle to be displayed in the user terminal **5** having sent the identification information in response to the identification information of the vehicle related to the purchase contract received by the identification information receiving means.

Also, in the aforementioned embodiment, in the case where a user requests for estimate/assessment through the predetermined operation after confirming the contents of the information displayed in the input contents confirmation window **C-4**, the manufacturer server **1** reads data set by the dealer selected by the user from the estimated price DB **35**, calculates an estimated price corresponding to the identification information (customize number) of the specification or configuration selected by the vehicle specification selection processing (M2), and sends the calculated estimated price to the user terminal **5**. This does not limit the invention. For example, in the case where a user requests for estimate/assessment, the manufacturer server **1** may request for estimate of the dealer server **2** of the dealer selected by the user, so that a person in charge of the dealer can set and input an estimated price in the dealer terminal **4** to be sent to the user terminal **5** via the manufacturer server **1** or directly.

As described so far, according to the sales support or configuration system and the like of this invention, even in the case where a customer customizes a vehicle by selecting the specification thereof online, the specification can be easily and definitely grasped after purchase, and hence, dislocation of the market can be minimized. However, in actual employment of this system, the manufacturer does not force dealers to employ the system but each dealer spontaneously employs the present system to its mind.

## Claims

1. A vehicle sales support method for supporting vehicle sales online for allowing a customer desiring to purchase a vehicle to select a specification of the vehicle by selecting preferred specification items among a plurality of specification items of the vehicle and sending purchase support information regarding the vehicle having said selected specification to said customer, comprising:
a contracted specification storing step of storing a selected specification of a vehicle related to a purchase contract, made at least after specification selection of said customer, in a database as contracted specification data in association with identification information for specifying the vehicle; and
a certificate issuing step, performed at given timing after making said purchase contract for the vehicle with said customer, of selecting said contracted specification data of the vehicle corresponding to said identification information from contracted specification data stored in said database and issuing a certificate for certifying said specification of the vehicle.

2. The vehicle sales support method of Claim 1,
wherein said certificate issued in said certificate issuing step is stated in at least one of a vehicle inspection document, a warranty and a body of said vehicle.

3. A vehicle sales support method for supporting vehicle sales online by allowing a customer desiring to purchase a vehicle to select a specification of the vehicle by selecting preferred specification items among a plurality of specification items of the vehicle and sending purchase support information regarding the vehicle having said selected specification to said customer, comprising:
a contracted specification storing step of storing a selected specification of a vehicle related to a purchase contract, made at least after specification selection of said customer, in a database as contracted specification data in association with identification information for specifying the vehicle;
a contracted specification selecting step, performed after making said purchase contract for the vehicle, of receiving a specification confirmation request regarding the vehicle related to said purchase contract and said identification information of the vehicle from an online terminal, and selecting said contracted specification data of the vehicle corresponding to said identification information from contracted specification data stored in said database; and
a specification submitting displaying step of sending said specification of the vehicle selected in said contracted specification selecting step to be displayed in said online terminal.

4. The vehicle sales support method of Claim 3,
wherein said identification information of the vehicle corresponds to a body number or a license number.

5. The vehicle sales support method of Claim 3 or 4, further comprising a certificate issuing step, performed after making said purchase contract for the vehicle with said customer, of receiving a certificate issue request from an online terminal and issuing a certificate for certifying said specification of the vehicle related to said purchase contract.

6. The vehicle sales support method of Claim 3, 4 or 5,
wherein a database in which vehicle purchase support information is previously stored correspondingly to said plurality of specification items selectable by said customer desiring to purchase the vehicle is prepared,
the method further comprises:
a purchase support information selecting step of receiving said specification of the vehicle selected by said customer from said online terminal and selecting vehicle purchase support information corresponding to said specification from said database;
a purchase support information submitting step of sending said purchase support information selected in said purchase support information selecting step to said online terminal; and
a purchase guiding step of receiving an operation signal sent from said online terminal when said customer performs a given operation in said online terminal, and guiding said customer to purchase of the vehicle having said selected specification,
said selected specification selected by said customer is displayed in said online terminal only when information for specifying said customer is received from said online terminal in said purchase guiding step, and
said contracted specification of the vehicle is sent to be displayed in said online terminal regardless of receipt of the information for specifying said customer in said specification submitting displaying step.

7. The vehicle sales support method of one of the preceding claims 3 to 6,
wherein a database in which vehicle purchase support information is previously stored correspondingly to said plurality of specifications selectable by said customer desiring to purchase the vehicle is prepared,
the method further comprises:
a purchase support information selecting step of receiving said specification of the vehicle selected by said customer from said online terminal and selecting vehicle purchase support information corresponding to said specification from said database;
a purchase support information submitting step of sending said purchase support information selected in said purchase support information selecting step to said online terminal; and
a purchase guiding step of receiving an operation signal sent from said online terminal when said customer performs a given operation in said online terminal, and guiding said customer to purchase of the vehicle having said selected specification,
said selected specification selected by said customer and estimated price information of the vehicle having said selected specification are displayed in said online terminal in said purchase guiding step, and
said estimated price information is not displayed in said online terminal in said specification submitting displaying step.

8. The vehicle sales support method of one of the preceding claims 3 to 7,
wherein a name of a catalogue model having a specification closest to said contracted specification and a specification difference from said catalogue model are displayed in said online terminal in said specification submitting displaying step in addition to said contracted specification of the vehicle selected in said contracted specification selecting step.

9. The vehicle sales support method of one of the preceding claims 3 to 8,
wherein a standard price of said catalogue model in a used vehicle market is sent to said online terminal to be displayed in addition to the name of said catalogue model in said specification submitting displaying step.

10. The vehicle sales support method of one of the preceding claims 3 to 9, further comprising a contracted specification modifying step, performed after making said purchase contract for the vehicle, of receiving said identification information of the vehicle related to said purchase contract and specification modification information from said online terminal, and modifying said contracted specification data of the vehicle stored in said database on condition that said specification modification information includes a given password.

11. A vehicle sales support system for supporting vehicle sales online by allowing a customer desiring to purchase a vehicle to select a specification of the vehicle by selecting preferred specification items among a plurality of specification items of the vehicle and sending purchase support information regarding the vehicle having said selected specification to said customer, comprising:
a database for storing a selected specification of a vehicle related to a purchase contract, made at least after specification selection of said customer, as contracted specification data in association with identification information for specifying the vehicle; and
certificate issuing means, operated at given timing after making said purchase contract for the vehicle with said customer, for selecting said contracted specification data of the vehicle corresponding to said identification information from contracted specification data stored in said database and issuing a certificate for certifying said specification of the vehicle.

12. A vehicle sales support system for supporting vehicle sales online by allowing a customer desiring to purchase a vehicle to select a specification of the vehicle by selecting preferred specification items among a plurality of specification items of the vehicle and sending purchase support information regarding the vehicle having said selected specification to said customer, comprising:
a database for storing a selected specification of a vehicle related to a purchase contract, made at least after specification selection of said customer, in a database as contracted specification data in association with identification information for specifying the vehicle;
contracted specification selecting means, operated after making said purchase contract for the vehicle, for receiving a specification confirmation request regarding the vehicle related to said purchase contract and said identification information of the vehicle from an online terminal, and selecting said contracted specification data of the vehicle corresponding to said identification information from contracted specification data stored in said database; and
specification submitting displaying means for sending said specification of the vehicle selected by said contracted specification selecting means to be displayed in said online terminal.

13. The vehicle sales support system of Claim 12, further comprising certificate issuing means, operated after making said purchase contract for the vehicle with said customer, for receiving a certificate issue request from an online terminal and issuing a certificate for certifying said specification of the vehicle related to said purchase contract.

14. The vehicle sales support system of Claim 12 or 13, further comprising:
a database in which vehicle purchase support information is previously stored correspondingly to said plurality of specification items selectable by said customer desiring to purchase the vehicle;
purchase support information selecting means for receiving said specification of the vehicle selected by said customer from said online terminal and selecting vehicle purchase support information corresponding to said specification from said database;
purchase support information submitting means for sending said purchase support information selected by said purchase support information selecting means to said online terminal; and
purchase guiding means for receiving an operation signal sent from said online terminal when said customer performs a given operation in said online terminal, and guiding said customer to purchase of the vehicle having said selected specification,
wherein said purchase guiding means displays said selected specification selected by said customer in said online terminal only when information for specifying said customer is received from said online terminal, and
said specification submitting displaying means sends said contracted specification of the vehicle to be displayed in said online terminal regardless of receipt of the information for specifying said customer.

15. The vehicle sales support system of Claim 12, 13 or 14, further comprising:
a database in which vehicle purchase support information is previously stored correspondingly to said plurality of specifications selectable by said customer desiring to purchase the vehicle;
purchase support information selecting means for receiving said specification of the vehicle selected by said customer from said online terminal and selecting vehicle purchase support information corresponding to said specification from said database;
purchase support information submitting means for sending said purchase support information selected by said purchase support information selecting means to said online terminal; and
purchase guiding means for receiving an operation signal sent from said online terminal when said customer performs a given operation in said online terminal, and guiding said customer to purchase of the vehicle having said selected specification,
wherein said purchase guiding means displays said selected specification selected by said customer and estimated price information of the vehicle having said selected specification in said online terminal, and
said specification submitting displaying means does not allow said estimated price information to be displayed in said online terminal.

16. The vehicle sales support system of one of the preceding claims 12 to 15,
wherein said specification submitting displaying means sends a name of a catalogue model having a specification closest to said contracted specification and a specification difference from said catalogue model to be displayed in said online terminal in addition to said contracted specification of the vehicle selected by said contracted specification selecting means.

17. The vehicle sales support system of one of the preceding claims 12 to 16,
wherein said specification submitting displaying means sends a standard price of said catalogue model in a used vehicle market to said online terminal to be displayed in addition to the name of said catalogue model.

18. The vehicle sales support system of one of the preceding claims 12 to 17, further comprising contracted specification modifying means, operated after making said purchase contract for the vehicle, for receiving said identification information of the vehicle related to said purchase contract and specification modification information from said online terminal, and modifying said contracted specification data of the vehicle stored in said database on condition that said specification modification information includes a given password.

19. A control program for a vehicle sales support system for supporting vehicle sales online by allowing a customer desiring to purchase a vehicle to select a specification of the vehicle by selecting preferred specification items among a plurality of specification items of the vehicle and sending purchase support information regarding the vehicle having said selected specification to said customer, comprising:
a contracted specification storing step of storing a selected specification of a vehicle related to a purchase contract, made at least after specification selection of said customer, in a database as contracted specification data in association with identification information for specifying the vehicle; and
a certificate issuing step, performed at given timing after making said purchase contract for the vehicle with said customer, of selecting said contracted specification data of the vehicle corresponding to said identification information from contracted specification data stored in said database and issuing a certificate for certifying said specification of the vehicle.

20. A control program for a vehicle sales support system for supporting vehicle sales online by allowing a customer desiring to purchase a vehicle to select a specification of the vehicle by selecting preferred specification items among a plurality of specification items of the vehicle and sending purchase support information regarding the vehicle having said selected specification to said customer, comprising:
a contracted specification storing step of storing a selected specification of a vehicle related to a purchase contract, made at least after specification selection of said customer, in a database as contracted specification data in association with identification information for specifying the vehicle;
a contracted specification selecting step, performed after making said purchase contract for the vehicle, of receiving a specification confirmation request regarding the vehicle related to said purchase contract and said identification information of the vehicle from an online terminal, and selecting said contracted specification data of the vehicle corresponding to said identification information from contracted specification data stored in said database; and
a specification submitting displaying step for sending said specification of the vehicle selected in said contracted specification selecting step to be displayed in said online terminal.

21. The control program for a vehicle sales support system of Claim 20, further comprising a certificate issuing step, performed after making said purchase contract for the vehicle with said customer, of receiving a certificate issue request from an online terminal and issuing a certificate for certifying said specification of the vehicle related to said purchase contract.

22. The control program for a vehicle sales support system of Claim 20 or 21,
wherein said vehicle sales support system includes a database in which vehicle purchase support information is previously stored correspondingly to said plurality of specification items selectable by said customer desiring to purchase the vehicle,
the control program further comprises:
a purchase support information selecting step of receiving said specification of the vehicle selected by said customer from said online terminal and selecting vehicle purchase support information corresponding to said specification from said database;
a purchase support information submitting step of sending said purchase support information selected in said purchase support information selecting step to said online terminal; and
a purchase guiding step of receiving an operation signal sent from said online terminal when said customer performs a given operation in said online terminal, and guiding said customer to purchase of the vehicle having said selected specification,
said selected specification selected by said customer is displayed in said online terminal only when information for specifying said customer is received from said online terminal in said purchase guiding step, and
said contracted specification of the vehicle is sent to be displayed in said online terminal regardless of receipt of the information for specifying said customer in said specification submitting displaying step.

23. The control program for a vehicle sales support system of Claim 20, 21 or 22,
wherein said vehicle sale support system includes a database in which vehicle purchase support information is previously stored correspondingly to said plurality of specifications selectable by said customer desiring to purchase the vehicle,
the control program further comprises:
a purchase support information selecting step of receiving said specification of the vehicle selected by said customer from said online terminal and selecting vehicle purchase support information corresponding to said specification from said database;
a purchase support information submitting step of sending said purchase support information selected in said purchase support information selecting step to said online terminal; and
a purchase guiding step of receiving an operation signal sent from said online terminal when said customer performs a given operation in said online terminal, and guiding said customer to purchase of the vehicle having said selected specification,
said selected specification selected by said customer and estimated price information of the vehicle having said selected specification are displayed in said online terminal in said purchase guiding step, and
said estimated price information is not displayed in said online terminal in said specification submitting displaying step.

24. The control program for a vehicle sales support system of one of the preceding claims 20 to 23,
wherein a name of a catalogue model having & specification closest to said contracted specification and a specification difference from said catalogue model are displayed in said online terminal in said specification submitting displaying step in addition to said contracted specification of the vehicle selected in said contracted specification selecting step.

25. The control program for a vehicle sales support system of one of the preceding claims 20 to 24,
wherein a standard price of said catalogue model in a used vehicle market is sent to said online terminal to be displayed in addition to the name of said catalogue model in said specification submitting displaying step.

26. The control program for a vehicle sales support system of one of the preceding claims 20 to 25, further comprising a contracted specification modifying step, performed after making said purchase contract for the vehicle, of receiving said identification information of the vehicle related to said purchase contract and specification modification information from said online terminal, and modifying said contracted specification data of the vehicle stored in said database on condition that said specification modification information includes a given password.
